(19) Europäisches Patentamt
European Patent Office
Office européen des brevets

(11) **EP 2 924 776 B1**

(12) **EUROPEAN PATENT SPECIFICATION**

(45) Date of publication and mention of the grant of the patent:
**09.05.2018 Bulletin 2018/19**

(21) Application number: **13856904.1**

(22) Date of filing: **19.11.2013**

(51) Int Cl.:
*H01M 4/36* (2006.01)   *H01M 4/38* (2006.01)
*H01M 4/587* (2010.01)   *C22C 13/00* (2006.01)
*C22C 30/04* (2006.01)   *C22C 24/00* (2006.01)
*H01M 4/13* (2010.01)   C22C 29/18 (2006.01)
*H01M 4/62* (2006.01)   H01M 10/052 (2010.01)

(86) International application number:
**PCT/JP2013/081119**

(87) International publication number:
**WO 2014/080887 (30.05.2014 Gazette 2014/22)**

(54) **NEGATIVE ELECTRODE FOR ELECTRICAL DEVICE, AND ELECTRICAL DEVICE USING SAME**

NEGATIVELEKTRODE FÜR EINE ELEKTRISCHE VORRICHTUNG UND ELEKTRISCHE VORRICHTUNG DAMIT

ÉLECTRODE NÉGATIVE POUR DISPOSITIF ÉLECTRIQUE ET DISPOSITIF ÉLECTRIQUE L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2012   JP 2012256931**

(43) Date of publication of application:
**30.09.2015   Bulletin 2015/40**

(60) Divisional application:
**18161796.0
18161798.6**

(73) Proprietor: **NISSAN MOTOR CO., LTD.
Yokohama-shi, Kanagawa 220-8623 (JP)**

(72) Inventors:
• **MIKI, Fumihiro
Atsugi-shi
Kanagawa 243-0123 (JP)**
• **WATANABE, Manabu
Atsugi-shi
Kanagawa 243-0123 (JP)**
• **YAMAMOTO, Kensuke
Atsugi-shi
Kanagawa 243-0123 (JP)**
• **SANADA, Takashi
Atsugi-shi
Kanagawa 243-0123 (JP)**
• **CHIBA, Nobutaka
Atsugi-shi
Kanagawa 243-0123 (JP)**

(74) Representative: **Hoefer & Partner Patentanwälte mbB
Pilgersheimer Straße 20
81543 München (DE)**

(56) References cited:
WO-A1-2004/086539   WO-A1-2012/160858
WO-A1-2013/055646   WO-A1-2013/099440
JP-A- 2000 113 885   JP-A- 2004 311 429
JP-A- 2006 216 277   JP-A- 2007 149 604
US-A1- 2010 119 942   US-A1- 2010 270 497

• M. A. AL-MAGHRABI ET AL: "A Combinatorial Study of the Sn-Si-C System for Li-Ion Battery Applications", JOURNAL OF THE ELECTROCHEMICAL SOCIETY, vol. 159, no. 6, 2 April 2012 (2012-04-02) , page A711, XP055135648, ISSN: 0013-4651, DOI: 10.1149/2.075206jes

**Description**

TECHNICAL FIELD

The present invention relates to a negative electrode for an electric device and an electric device using the same. The negative electrode for an electric device of the present invention and the electric device using the same are used in a driving power source and an auxiliary power source for motors and the like of vehicles including electric vehicles, fuel-cell vehicles, and hybrid electric vehicles as secondary batteries and capacitors.

BACKGROUND ART

In recent years, it has been increasingly desirable to reduce carbon dioxide in order to address air pollution and global warming. The automobile industry expects to promote electric vehicles (EVs) and hybrid electric vehicles (HEVs) for reducing carbon oxide emissions. Accordingly, electric devices including secondary batteries to drive motors, which have a key to put EVs and HEVs into practical use, are being actively developed.

The secondary batteries for driving motors need to have extremely high output characteristics and high energy compared with consumer lithium ion secondary batteries used in mobile phones and notebook personal computers. Accordingly, lithium ion secondary batteries, which have the highest theoretical energy among all batteries, are attracting attention and are now being developed rapidly.

Generally, a lithium ion secondary battery has a configuration in which a positive electrode and a negative electrode are connected through an electrolyte layer and are accommodated in a battery casing. The positive electrode includes a positive electrode current collector and a positive electrode active material and the like applied to both sides of the positive electrode current collector using a binder. The negative electrode includes a negative electrode current collector and a negative electrode active material and the like applied to the both sides of the negative electrode current collector using a binder.

The negative electrode of conventional lithium ion secondary batteries is made of a carbon/graphite-based material, which is advantageous in charge-discharge cycle life and cost. However, with a carbon/graphite-based material, charge and discharge are performed by storage and release of lithium ions into and from graphite crystals. Accordingly, the thus-configured lithium ion secondary batteries have disadvantage of not providing charge-discharge capacity equal to or more than the theoretical capacity of 372 mAh/g obtained from $LiC_6$, which is the maximum lithium introducing compound. It is therefore difficult for such carbon/graphite-based negative electrode materials to implement capacity and energy density that satisfy the level of practical use in vehicle applications.

On the other hand, batteries including negative electrodes made of a material which can be alloyed with Li have higher energy density than that of the conventional batteries employing carbon/graphite-based negative electrode materials. Accordingly, the materials which can be alloyed with Li are expected as the negative electrode materials in vehicle applications. One mole of a Si material, for example, stores and releases 4.4 mole of lithium ions as expressed by the following reaction formula (A). The theoretical capacity of $Li_{22}Si_5$ (=$Li_{4.4}Si$) is 2100 mAh/g. The initial capacity per Si weight is as much as 3200 mAh/g.

[Chem. 1]

$$Si + 4.4Li^+ + e^- \leftrightarrow Li_{4.4}Si \text{ ...} \qquad (A)$$

However, in a lithium ion secondary battery whose negative electrodes are made of a material that can be alloyed with Li, the negative electrodes expand and contract during the processes of charge and discharge. The graphite material expands in volume by about 1.2 times when storing Li ions, for example. On the other hand, the Si material significantly changes in volume (by about 4 times) because Si transits from the amorphous phase to the crystalline phase when Si is alloyed with Li. This could shorten the cycle life of electrodes. Moreover, in the case of the Si negative electrode active material, the capacity is a trade-off for the cycle durability. It is therefore difficult to implement high capacity while improving high cycle durability.

To solve the aforementioned problems, a negative electrode active material for a lithium ion secondary battery including an amorphous alloy expressed by $Si_xM_yAl_z$ is proposed (for example, see Patent Literature 1). Herein, x, y, and z in the above formula represent atomic percents and satisfy the following conditions: x + y + z = 100; x ≥ 55; y < 22; and z > 0. M is a metal composed of at least one of Mn, Mo, Nb, W, Ta, Fe, Cu, Ti, V, Cr, Ni, Co, Zr, and Y. In the invention described in Patent Literature 1, Paragraph [0018] describes that it is possible to implement good cycle life as well as high capacity by minimizing the content of the metal M.

Patent Literature 2 teaches an electrode material for a lithium secondary battery which includes particles of a solid state alloy having silicon as a main component, wherein the particles of the solid state alloy have a microcrystal or amorphous material including an element other than silicon, dispersed in microcrystalline silicon or amorphized silicon.

The solid state alloy preferably contains a pure metal or a solid solution. The composition of the alloy preferably has an element composition in which the alloy is completely mixed in a melted liquid state, whereby the alloy has a single phase in a melted liquid state without pressure of two or more phases. The element composition can be determined by the kind of elements constituting the alloy and an atomic ratio of the elements.

CITATION LIST

PATENT LITERATURE

Patent Literature 1: Japanese Unexamined Patent Application Publication No. 2009-517850
Patent Literature 2: WO 2004/086539 A1

SUMMARY OF INVENTION

TECHNICAL PROBLEM

However, the lithium ion secondary battery whose negative electrodes include an amorphous alloy expressed by the formula $Si_xM_yAl_z$ described in Patent Literature 1 exhibits good cycle characteristics but does not have sufficient initial capacity. The cycle characteristics are also inadequate.

An object of the present invention is to provide a negative electrode for an electric device such as a Li-ion secondary battery which exhibits balanced characteristics of having high initial capacity and retaining high cycle characteristics.

SOLUTION TO PROBLEM

The inventors made various studies to solve the aforementioned problem and is defined in the appended claims. The inventors found that the above object could be solved by using negative electrodes employing a negative electrode active material composed of a mixture of a predetermined ternary Si alloy and a carbon material, thus completing the invention.

The present invention relates to a negative electrode for an electric device, including: a current collector; and an electrode layer containing a negative electrode active material, an electrically-conductive auxiliary agent and a binder and formed on a surface of the current collector. The negative electrode active material is a mixture of a carbon material and an alloy (hereinafter, just referred to as an alloy or Si alloy) represented by the following formula (1):
[Chem. 2]

$$Si_xSn_yM_zA_a \ ... \qquad (1)$$

In formula (1), M is V, A is inevitable impurity, and x, y, z, and a represent mass percent values and satisfy $27 \leq x < 100$, $0 < y \leq 73$, $0 < z \leq 73$, and $0 \leq a < 0.5$, $x + y + z + a = 100$, and wherein the alloy has an average particle diameter smaller than that of the carbon material, and the alloy is located between particles of the carbon material.

BRIEF DESCRIPTION OF DRAWINGS

[Fig. 1] Fig. 1 is a schematic cross-sectional view schematically illustrating the overview of a laminated-type flat non-bipolar lithium ion secondary battery as a typical embodiment of an electric device according to the present invention.
[Fig. 2] Fig. 2 is a perspective view schematically illustrating an exterior of the laminated-type flat lithium ion secondary battery as the typical embodiment of the electric device according to the present invention.
[Fig. 3] Fig. 3 is a ternary composition diagram showing a plot of alloy components of films formed in reference example A together with a composition range of the Si-Sn-Al alloy constituting a negative electrode active material included in the negative electrode for an electric device not falling under the scope of the present invention.
[Fig. 4] Fig. 4 is a ternary composition diagram showing a preferable composition range of the Si-Sn-Al alloy constituting the negative electrode active material included in the negative electrode for an electric device not falling under the scope of the present invention.

[Fig. 5] Fig. 5 is a ternary composition diagram showing a more preferable composition range of the Si-Sn-Al alloy constituting the negative electrode active material included in the negative electrode for an electric device not falling under the scope of the present invention.

[Fig. 6] Fig. 6 is a ternary composition diagram showing a still more preferable composition range of the Si-Sn-Al alloy constituting the negative electrode active material included in the negative electrode for an electric device not falling under the scope of the present invention.

[Fig. 7] Fig. 7 is a ternary composition diagram showing a plot of alloy components of films formed in reference example B together with a composition range of a Si-Sn-V alloy constituting the negative electrode active material included in the negative electrode for an electric device according to the present invention.

[Fig. 8] Fig. 8 is a ternary composition diagram showing a preferable composition range of the Si-Sn-V alloy constituting the negative electrode active material included in the negative electrode for an electric device according to the present invention.

[Fig. 9] Fig. 9 is a ternary composition diagram showing a more preferable composition range of the Si-Sn-V alloy constituting the negative electrode active material included in the negative electrode for an electric device according to the present invention.

[Fig. 10] Fig. 10 is a ternary composition diagram showing a still more preferable composition range of the Si-Sn-V alloy constituting the negative electrode active material included in the negative electrode for an electric device according to the present invention.

[Fig. 11] Fig. 11 is a ternary composition diagram showing a plot of alloy components of films formed in reference example C together with a composition range of a Si-Sn-C alloy constituting the negative electrode active material included in the negative electrode for an electric device not falling under the scope of the present invention.

[Fig. 12] Fig. 12 is a ternary composition diagram showing a preferable composition range of the Si-Sn-C alloy constituting the negative electrode active material included in the negative electrode for an electric device not falling under the scope of the present invention.

[Fig. 13] Fig. 13 is a ternary composition diagram showing a more preferable composition range of the Si-Sn-C alloy constituting the negative electrode active material included in the negative electrode for an electric device not falling under the scope of the present invention.

[Fig. 14] Fig. 14 is a ternary composition diagram showing a still more preferable composition range of the Si-Sn-C alloy constituting the negative electrode active material included in the negative electrode for an electric device not falling under the scope of the present invention.

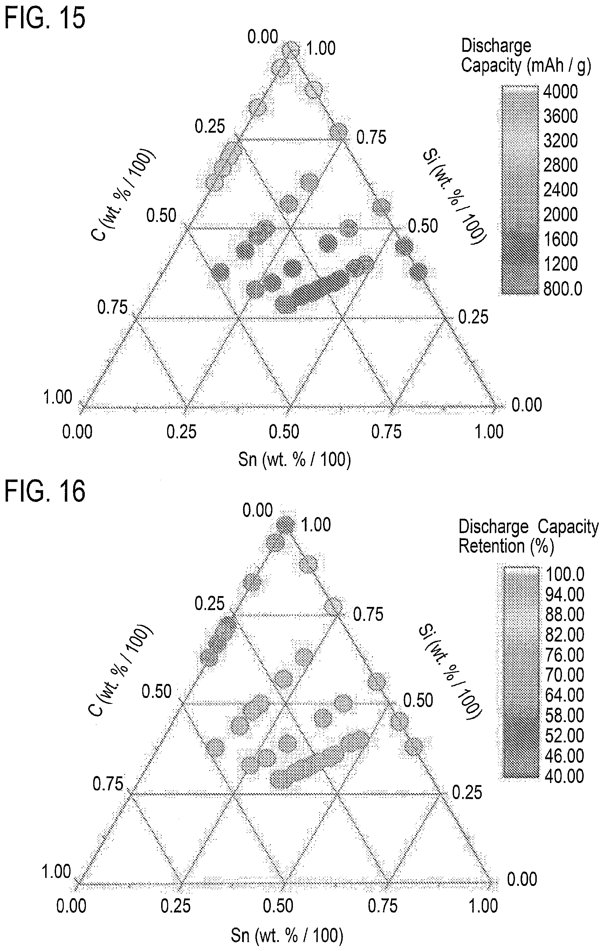

[Fig. 15] Fig. 15 is a diagram showing an influence of the alloy composition of the negative electrode active material on the initial discharge capacity in batteries obtained in reference examples and comparative reference examples.

[Fig. 16] Fig. 16 is a diagram showing an influence of the alloy composition of the negative electrode active material on the discharge capacity retention rate at the 50th cycle in the batteries obtained in the reference examples and comparative reference examples.

[Fig. 17] Fig. 17 is a diagram showing an influence of the alloy composition of the negative electrode active material on the discharge capacity retention rate at the 100th cycle in the batteries obtained in the reference examples and comparative reference examples.

[Fig. 18] Fig. 18 is a diagram showing a relationship between the Si alloy content and the energy density or discharge capacity retention rate in reference examples.

DESCRIPTION OF EMBODIMENTS

As described above, the present invention is characterized by using a negative electrode including a negative electrode active material composed of a mixture of a predetermined ternary Si alloy (a ternary Si-Sn-M alloy) and a carbon material.

According to the present invention, the ternary Si-Sn-M alloy is applied. This can provide an action of reducing the amorphous to crystalline phase transition in the Si-Li alloying process to increase the cycle life. Moreover, the alloy is mixed with a graphite material. This can provide an action of preventing uneven reaction of the Si alloy within the electrode layer (negative electrode active material) with Li ions to increase the cycle durability. As a result of the aforementioned complex actions, it is possible to provide such a useful effect that the negative electrode for an electric device according to the present invention provides high initial capacity and also provides high capacity and high cycle durability.

Hereinafter, a description is given of an embodiment of the negative electrode for an electric device of the present invention and an electric device using the same with reference to the drawings. The technical scope of the present invention should be defined based on the description of claims and is not limited to the following embodiment. In the description of the drawings, the same components are given the same reference numerals, and overlapping description is omitted. The dimensional proportions in the drawings are exaggerated for convenience of explanation and are different from actual proportions in some cases. In the present invention, an "electrode layer" refers to a mixture layer containing a negative electrode active material, an electrically-conductive auxiliary agent, and a binder and is also referred to as a "negative electrode active material layer" in the description of the specification. The electrode layer of each positive electrode is also referred to as a "positive electrode active material layer".

Hereinafter, the basic configuration of the electric device to which the negative electrode for an electric device of the present invention is applicable is described using the drawings. The electric device shown in the embodiment by way of example is a lithium ion secondary battery.

First, with a negative electrode for a lithium ion secondary battery as a typical embodiment of the negative electrode for an electric device according to the present invention and a lithium ion secondary battery employing the same, cells (single cell layers) have high voltage. The lithium ion secondary battery therefore achieves high energy density and high output density. The lithium ion secondary battery including the negative electrode for a lithium ion secondary battery of the embodiment is therefore excellent as a driving power supply or auxiliary power supply for vehicles and can be desirably used as lithium ion secondary batteries for a vehicle driving power source and the like. In addition, the lithium ion secondary battery of the embodiment is adequately applicable to lithium ion secondary batteries for mobile devices such as mobile phones.

In other words, the lithium ion secondary battery which is a target of the embodiment only needs to include the negative electrode for a lithium ion secondary battery of the embodiment described below, and the other constituent requirements should not be particularly limited.

When lithium ion secondary batteries are classified by the style and structure, for example, the negative electrode of the embodiment is applicable to every known style and structure of laminated-type (flat) batteries and winding-type (cylindrical) batteries. When the laminated-type (flat) battery structure is employed, long-term reliability is ensured by a sealing technique such as simple thermocompression. The laminated battery structure is advantageous in terms of cost and workability.

Classifying lithium ion secondary batteries by the electric connection manner (electrode structure), the present invention is applicable to both non-bipolar type (inner parallel connection type) batteries and bipolar type (inner serial connection type) batteries.

If lithium ion secondary batteries are classified by the type of electrolyte layers thereof, the negative electrode of the embodiment is applicable to batteries including conventionally-known types of electrolyte layers, such as liquid electrolyte batteries whose electrolyte layers are composed of liquid electrolyte such as non-aqueous electrolysis solution and polymer batteries whose electrolyte layers are composed of polymer electrolyte. The polymer batteries are further classified into gel electrolyte batteries employing polymer gel electrolyte (also just referred to as gel electrolyte) and solid polymer (all-solid-state) batteries employing polymer solid electrolyte (also just referred to as polymer electrolyte).

In the following description, a non-bipolar (inner parallel connection type) lithium ion secondary battery including the negative electrode for a lithium ion secondary battery of the embodiment is briefly described using the drawings. The technical scope of the lithium ion secondary battery of the embodiment is not limited to the following description.

<Entire Structure of Battery>

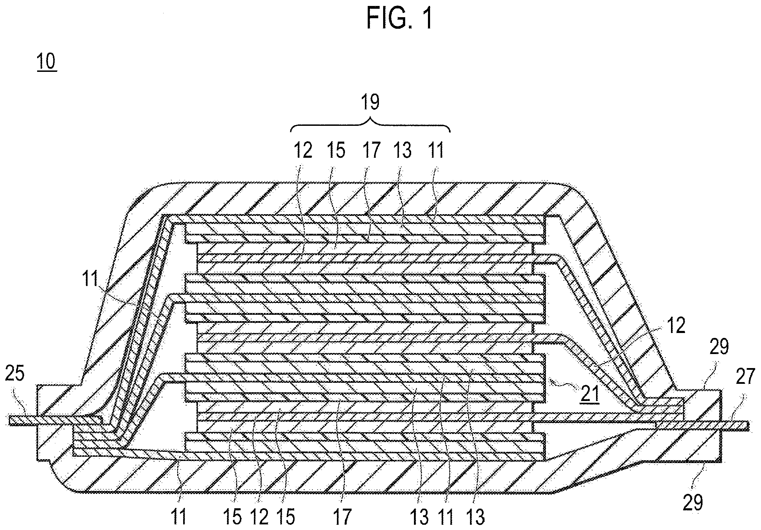

Fig. 1 is a schematic cross-sectional view schematically illustrating the entire structure of a flat (laminated-type) lithium ion secondary battery (hereinafter, also referred to as just a laminated battery) as a typical embodiment of the electric device of the present invention.

As illustrated in Fig. 1, a laminated battery 10 of the embodiment has a structure in which a substantially rectangular power generation element 21, in which charging and discharging reactions actually proceed, is sealed between laminated sheets 29 as a battery exterior member. The power generation element 21 has a configuration in which positive electrodes, electrolyte layers 17, and negative electrodes are stacked on one another. Each positive electrode includes a positive electrode current collector 11 and positive electrode active material layers 13 provided on both surfaces of the current collector 11. Each negative electrode includes a negative electrode current collector 12 and negative electrode active material layers 15 formed on both surfaces of the current collector 12. Specifically, each positive electrode, electrolyte layer, and negative electrode are stacked on one another in this order in such a manner that each of the positive electrode active material layers 13 faces the negative electrode active material layer 15 adjacent thereto with the corresponding electrolyte layer 17 interposed therebetween.

The adjacent positive electrode, electrolyte layer, and negative electrode constitute each single cell layer 19. In other words, the laminated battery 10 illustrated in Fig. 1 has such a configuration that the plural single cell layers 19 are stacked on one another to be electrically connected in parallel. Each of the outermost positive electrode current collectors which are located in the outermost layers of the power generation element 21 is provided with the positive electrode active material layer 13 on only one side thereof but may be provided with the active material layers on both sides. In other words, the outermost layers may be just composed of current collectors each provided with active material layers on both sides instead of the outermost layer-dedicated current collectors each provided with an active material layer only on one side. The positions of the positive electrodes and negative electrodes in Fig. 1 may be inverted so that the outermost negative electrode current collectors are located in both outermost layers of the power generation element 21 and are each provided with a negative electrode active material layer on one side or on both sides.

The positive electrode current collectors 11 and negative electrode current collectors 12 are respectively attached to a positive electrode current collector plate 25 and a negative electrode current collector plate 27, which are electrically connected to respective electrodes (positive and negative electrodes). The current collector plates 25 and 27 are sandwiched by edges of the laminated films 29 and protrude out of the laminated films 29. The positive and negative electrode current collector plates 25 and 27 may be attached to the positive and negative electrode current collectors 11 and 12 of the respective electrodes through positive and negative electrode leads (not shown) by ultrasonic welding, resistance welding, or the like if necessary.

The lithium ion secondary battery described above is characterized by the negative electrodes. Hereinafter, the description is given of main constituent members of the battery including the negative electrodes.

<Active Material Layer>

The active material layers 13 and 15 include active materials and further include other additives when needed.

[Positive electrode active material Layer]

The positive electrode active material layer 13 includes a positive electrode active material.

(Positive electrode active material)

Examples of the positive electrode active material are lithium-transition metal composite oxides, lithium-transition metal phosphate compounds, lithium-transition metal sulfate compounds, solid solution alloys, ternary alloys, NiMn alloys, NiCo alloys, and spinel Mn alloys.

Examples of the lithium-transition metal composite oxides are $LiMn_2O_4$, $LiCoO_2$, $LiNiO_2$, $Li(Ni, Mn, Co)O_2$, $Li(Li, Ni, Mn, Co)O_2$, $LiFePO_4$, and oxides obtained by replacing a part of the above transition metal with another element.

The solid solution alloys include $xLiMO_2 \cdot (1-x)Li_2NO_3$ ($0 < x < 1$, M is at least one type of transition metals having an average oxidation state of 3+, and N is at least one type of transition metals having an average oxidation state of 4+), $LiRO_2$-$LiMn_2O_4$ (R is a transition metal element including Ni, Mn, Co, and Fe), and the like.

The ternary alloys include nickel-cobalt-manganese (composite) positive electrode materials and the like.

The NiMn alloys include $LiNi_{0.5}Mn_{1.5}O_4$ and the like.

The NiCo alloys include $Li(NiCo)O_2$ and the like.

The spinel Mn alloys include $LiMn_2O_4$ and the like.

In some cases, two or more types of positive electrode active materials may be used together. The positive electrode active material is preferably a lithium-transition metal composite oxide from the viewpoint of the capacity and output characteristics. It is certain that positive electrode active materials other than the aforementioned materials can be used. When the optimal particle diameters of active materials to exert the specific effects are different from each other, the different particle diameters optimal to exert the specific effects may be mixed. It is unnecessary to equalize the particle diameters of all the active materials.

The average particle diameter of the positive electrode active materials contained in the positive electrode active material layer 13 is not particularly limited but is preferably 1 to 30 $\mu$m and more preferably 5 to 20 $\mu$m from the viewpoint of increasing the output. In this specification, the particle diameter refers to the maximum distance between arbitrary two points on the outline of an active material particle (in the observation surface) observed using an observation means, such as a scanning electron microscope (SEM) or a transmission electron microscope (TEM). In the specification, the value of the "average particle diameter" is a value calculated as an average of particle diameters of particles observed in several to several tens fields of view by using an observation means, such as a scanning electron microscope (SEM) or a transmission electron microscope (TEM). The particle diameters and average particle diameters of the other constituent components are defined in a similar manner.

The positive electrode (positive electrode active material layer) can be formed by a normal method of applying (coating with) slurry and can be also formed by any one of kneading, sputtering, vapor deposition, CVD, PVD, ion plating, and thermal spraying.

[Negative electrode active material Layer]

The negative electrode active material layer 15 includes a negative electrode active material.

(Negative electrode active material)

The negative electrode active material is a mixture of a predetermined alloy and a carbon material.

Alloy

In an embodiment not falling under the scope of the present invention, the alloy is represented by the following formula (1).
[Chem. 3]

$$Si_xSn_yM_zA_a \ldots \qquad (1)$$

In the above formula (1), M is at least one metal selected from the group consisting of Al, V, C, and combinations thereof. A is inevitable impurity. x, y, z, and a represent mass percent values. Herein, $0 < x < 100$; $0 < y < 100$; $0 < z < 100$; $0 \leq a < 0.5$; and $x + y + z + a = 100$. In the specification, the inevitable impurities refer to substances which exist in raw materials of the Si alloy or substances unavoidably mixed into the Si alloy in the manufacturing process. The inevitable impurities are impurities which are unnecessary under normal situations but are allowable because the content thereof is not high enough to influence on the characteristics of the Si alloy.

In the embodiment, Sn as a first additive element and M (at least one metal selected from the group consisting of Al, V, C, and combinations thereof) as a second additive element are selected as the negative electrode active material, so that the amorphous to crystalline phase transition can be reduced in the Li alloying process. This can increase the cycle life. The negative electrode active material of the embodiment implements higher capacity than conventional negative electrode active materials, for example, carbon-based negative electrode active materials.

The amorphous to crystalline phase transition in the Li alloying process is inhibited for the following reason. When Si of the Si material is alloyed with Li, the Si material transits from the amorphous to crystalline phases and significantly changes in volume (by about four times), and the particles thereof are broken. The Si material therefore loses the function as the active material. Accordingly, the amorphous to crystalline phase transition is inhibited to prevent collapse of the particles themselves and thereby allow the Si material to retain the function as the active material (high capacity), thus increasing the cycle life. By selecting the first and second additive elements as described above, it is possible to provide Si alloy negative electrode active materials that can implement high capacity and high cycle durability.

As described above, M is at least one metal selected from the group consisting of Al, V, C, and combinations thereof. Hereinafter, Si alloys including $Si_xSn_yAl_zA_a$, $Si_xSn_yV_zA_a$, and $Si_xSn_yC_zA_a$ are described, wherein alloys including $Si_xSn_yAl_zA_a$, and $Si_xSn_yC_zA_a$ do not fall under the scope of the present invention.

$$Si_xSn_yAl_zA_a$$

By including Sn as the first additive element and Al as the second additive element as described above, $Si_xSn_yAl_zA_a$ above can inhibit the amorphous to crystalline phase transition at the Li alloying process and increase the cycle life. Accordingly, the negative electrode active material including $Si_xSn_yAl_zA_a$ provides higher capacity than that of conventional negative electrode active materials, for example, carbon-based negative electrode active materials.

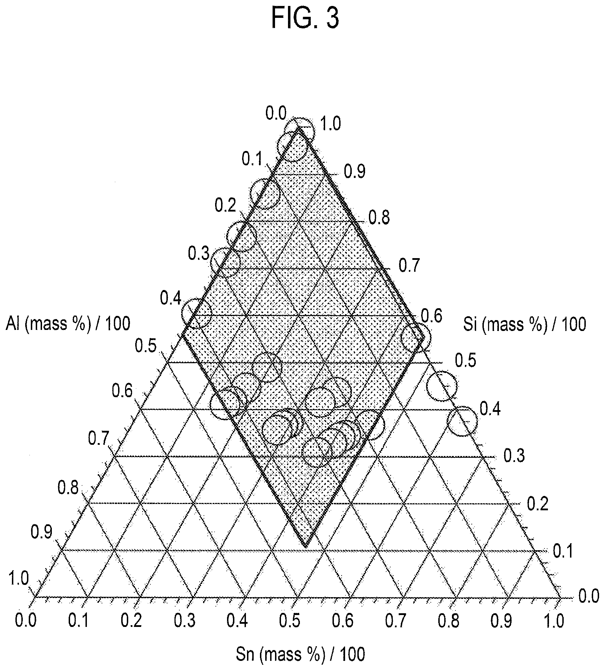

In the composition of the aforementioned alloy, preferably, x is not less than 12 and less than 100; y is more than 0 and not more than 45; and z is more than 0 and not more than 43. The composition of the alloy is represented by the shaded region in Fig. 3. By including the aforementioned composition, the Si alloy can provide high capacity as well as maintain high discharge capacity even after 50 cycles and 100 cycles.

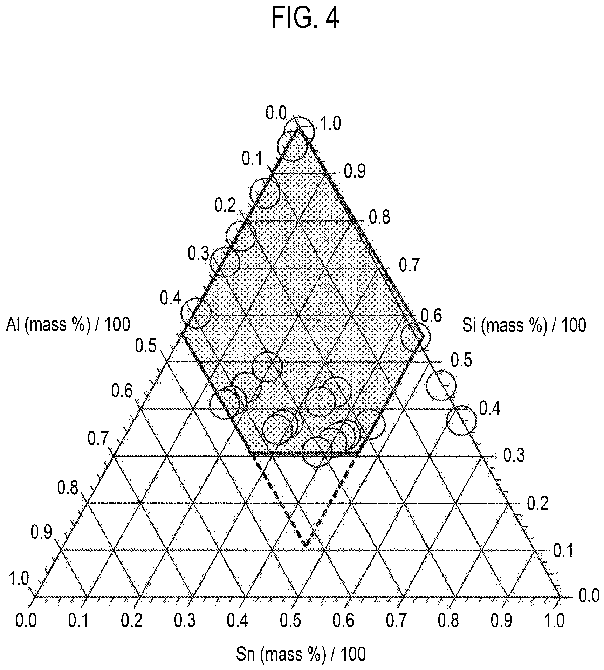

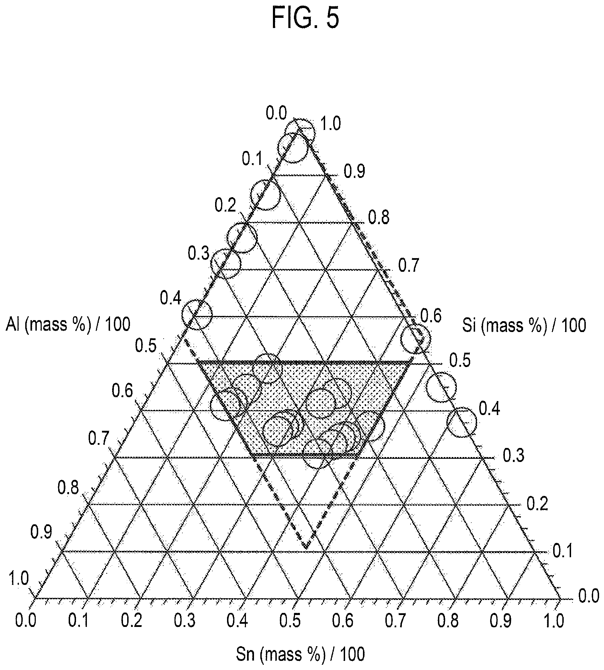

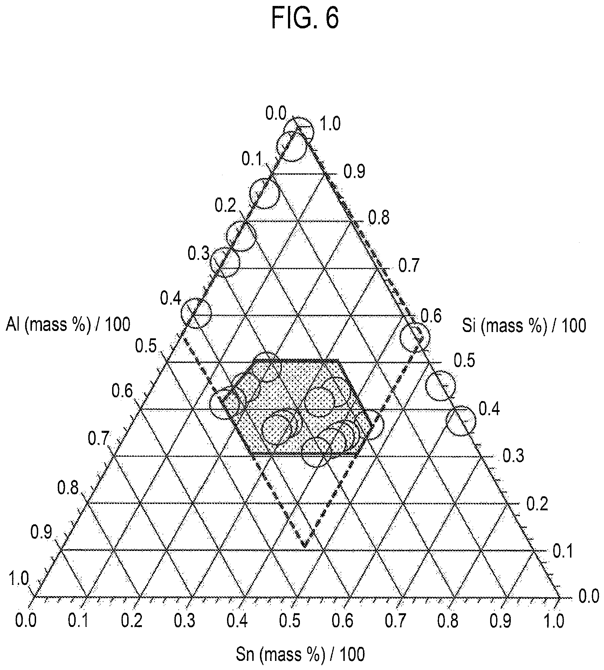

From the viewpoint of further improving the aforementioned characteristics of the negative electrode active material, x is not less than 31 as represented by the shaded region in Fig. 4. More preferably, x is in a range of 31 to 50 as represented by the shaded region in Fig. 5. Still more preferably, as represented by the shaded region in Fig. 6, y is in a range of 15 to 45, and z is in a range of 18 to 43%. Most preferably, x is in a range of 16 to 45%.

A is impurities other than the above-described three components which are derived from the raw materials or process (inevitable impurities). a is $0 \leq a < 0.5$, and preferably, $0 \leq a < 0.1$.

$$Si_xSn_yV_zA_a$$

By including Sn as the first additive element and V as the second additive element as described above, $Si_xSn_yV_zA_a$ above can inhibit the amorphous to crystalline phase transition in the Li alloying process and increase the cycle life. Accordingly, the negative electrode active material employing $Si_xSn_yV_zA_a$ provides higher capacity than that of conventional negative electrode active materials, for example, carbon-based negative electrode active materials.

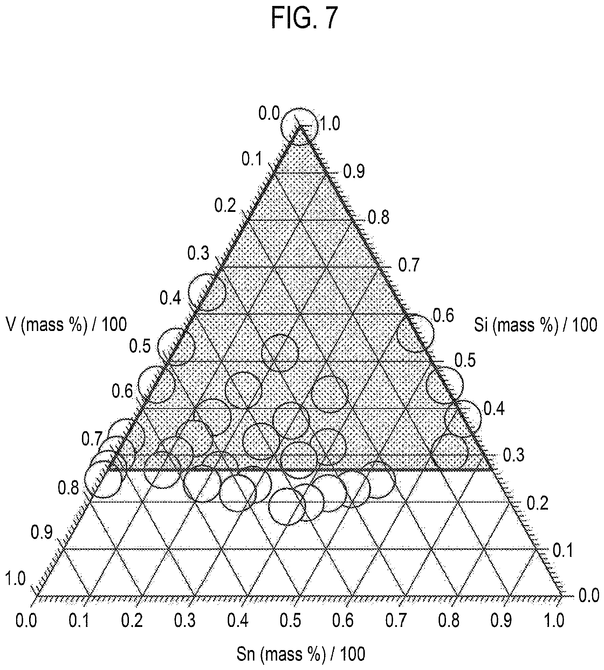

In the composition of the aforementioned alloy, x is not less than 27 and less than 100; y is more than 0 and not more than 73; and z is more than 0 and not more than 73. The above numerical ranges correspond to the range represented by the shaded region in Fig. 7. By including the aforementioned composition, the Si alloy can provide high capacity as well as maintain high discharge capacity even after 50 cycles and 100 cycles.

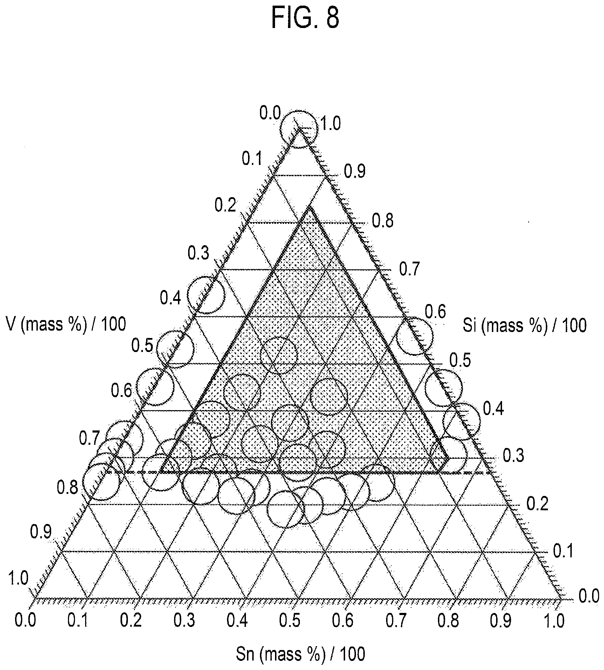

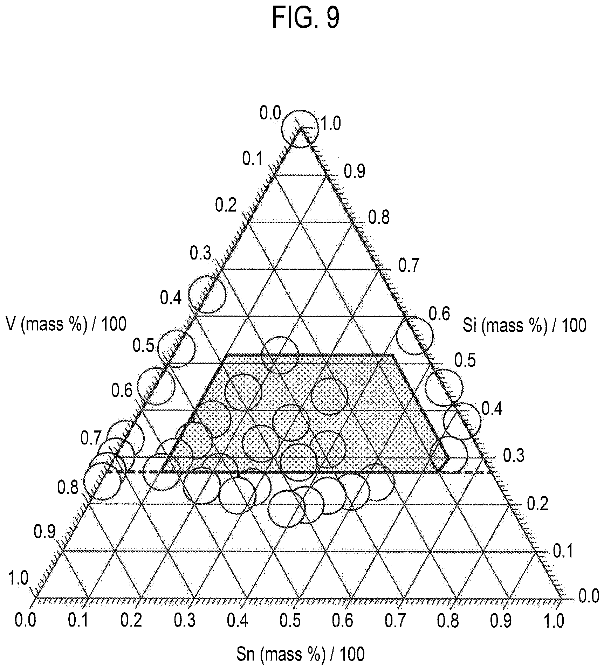

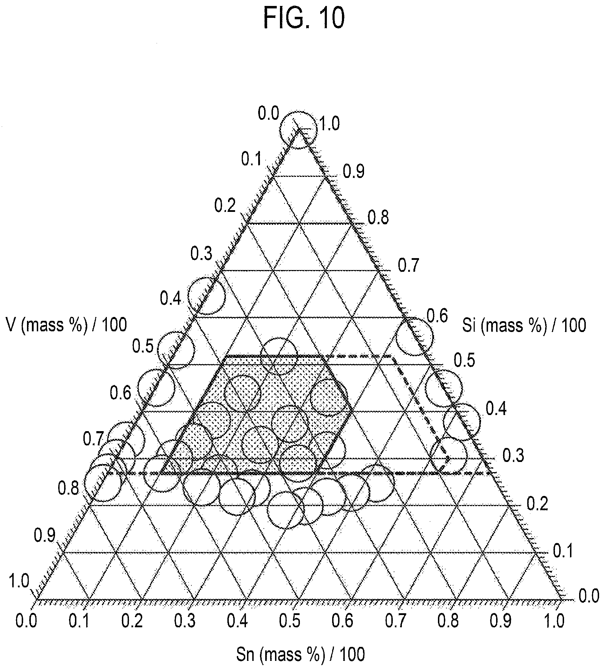

From the viewpoint of further improving the aforementioned characteristics of the negative electrode active material, it is preferable that: x is in a range of 27 to 84; y is in a range of 10 to 73; and z is in a range of 6 to 73. More preferably, x is in a range of 27 to 84; y is in a range of 10 to 63; and z is in a range of 6 to 63 as represented by the shaded region in Fig. 8. Still more preferably, x is in a range of 27 to 52 as represented by the shaded region in Fig. 9. Still more preferably, y is in a range of 10 to 52; and z is in a range of 20 to 63 as represented by the shaded region in Fig. 10. Most preferably, y is in a range of 10 to 40.

a is $0 \leq a < 0.5$, and preferably, $0 \leq a < 0.1$.

$$Si_xSn_yC_zA_a$$

By including Sn as the first additive element and C as the second additive element as described above, $Si_xSn_yC_zA_a$ above can inhibit the amorphous to crystalline phase transition in the Li alloying process and increase the cycle life. Accordingly, the negative electrode active material employing $Si_xSn_yC_zA_a$ provides higher capacity than that of conventional negative electrode active materials, for example, carbon-based negative electrode active materials.

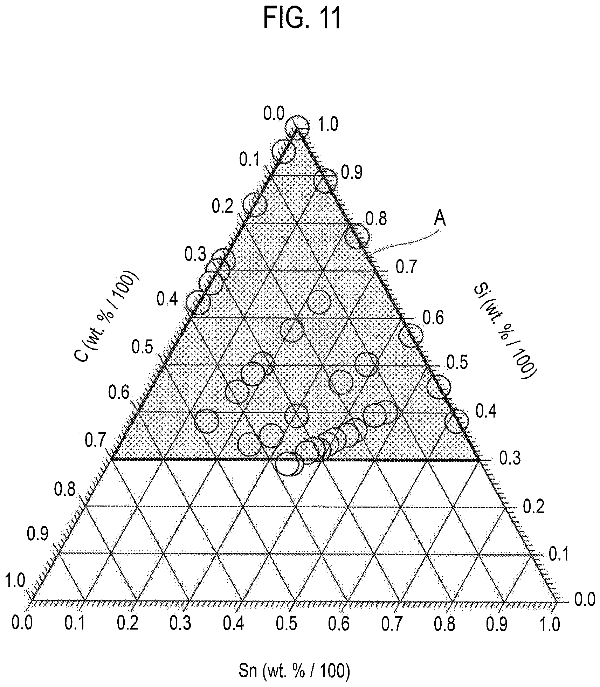

In the composition of the aforementioned alloy, preferably, x is not less than 29. The above numerical range corresponds to the range indicated by reference symbol A in Fig. 11. By including the aforementioned composition, the Si alloy can provide high capacity as well as maintain the high discharge capacity even after 50 cycles and 100 cycles.

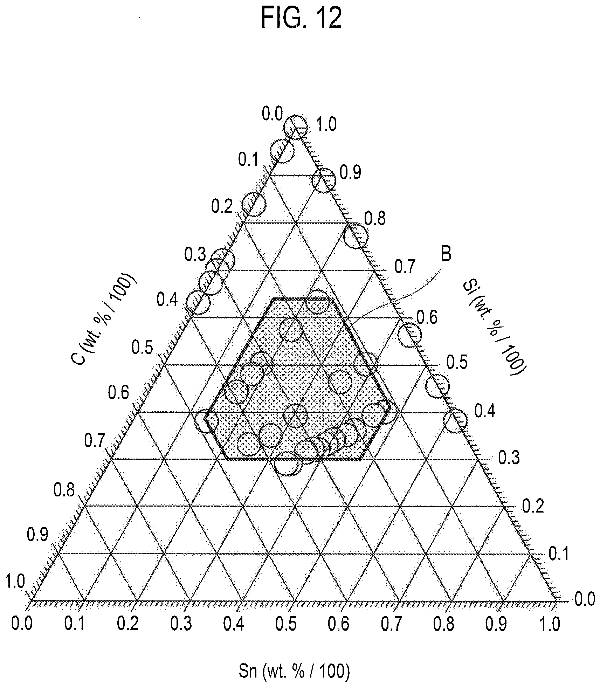

From the viewpoint of further improving the aforementioned characteristics of the negative electrode active material, it is preferable that: x is in a range of 29 to 63; y is in a range of 14 to 48; and z is in a range of 11 to 48. The above numerical range corresponds to the range indicated by reference symbol B in Fig. 12.

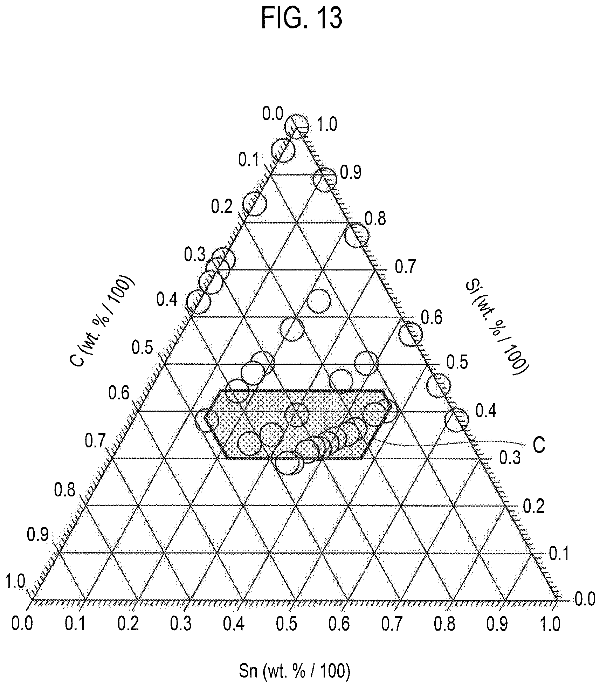

From the viewpoint of ensuring better cycle properties, it is preferable that x is in a range of 29 to 44; y is in a range of 14 to 48; and z is in a range of 11 to 48. This numerical range corresponds to the range indicated by reference symbol C in Fig. 13.

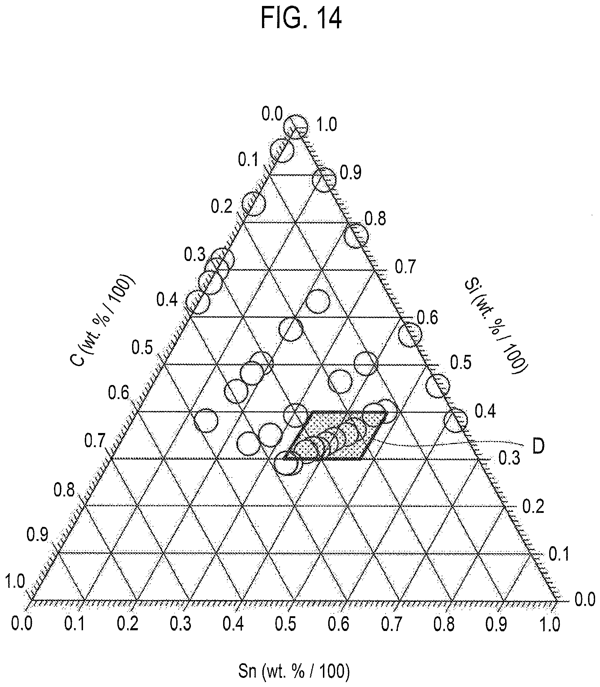

Still more preferably, x is in a range of 29 to 40, and y is in a range of 34 to 48 (accordingly, $12 < z < 37$). This numerical range corresponds to the range indicated by reference symbol D in Fig. 14.

a is $0 \leq a < 0.5$, and preferably, $0 \leq a < 0.1$.

The average particle diameter of the Si alloy only needs to be equal to the average particle diameter of existing negative electrode active materials included in the negative electrode active material layer 15 and is not particularly limited. The average particle diameter of the Si alloy needs to be preferably in a range from 1 to 20 $\mu$m from the viewpoint of implementing high output but is not limited to the above range. It is certain that the average particle diameter of the Si alloy may be out of the aforementioned range as long as the Si alloy can effectively exert the operational effect of the embodiment. The shape of the Si alloy is not particularly limited and can be spherical, elliptical, cylindrical, polygonal columnar, flaky, or amorphous.

Manufacturing Method of Alloy

The method of manufacturing the alloy expressed by the composition formula $Si_xSn_yM_zA_a$ according to the embodiment is not particularly limited and can be selected from various types of conventionally-known manufacturing methods. In other words, every kind of manufacturing methods can be applied to the embodiment because there are very few differences in the alloy state and characteristics between the manufacturing methods.

To be specific, the method of manufacturing an alloy expressed by the composition formula $Si_xSn_yM_zA_a$ in the form of particles can be mechanical alloying method, arc plasma melting method, and the like, for example.

With the aforementioned methods of manufacturing alloy in the form of particles, the particles are mixed with a binder, an electrically-conductive auxiliary agent, and a viscosity modifying solvent to prepare slurry. The slurry is used to form slurry electrodes. Accordingly, the electrodes can be easily mass produced and are excellent in being easily put into practical use as actual electrodes for batteries.

Carbon material

The carbon material that can be used in the present invention is not particularly limited and can be: graphite as high-crystallinity carbon such as natural graphite and artificial graphite; low-crystallinity carbon such as soft carbon and hard carbon; carbon black such as Ketjenblack, acetylene black, channel black, lamp black, oil furnace black, and thermal black; and carbon materials such as fullerene, carbon nanotubes, carbon nanofibers, carbon nanohorns, and carbon fibrils. Among the aforementioned materials, graphite is preferably used.

In the embodiment, the negative electrode active material is a mixture of the carbon material and the aforementioned alloy, so that it is possible to exhibit a good balance between providing high initial capacity and maintaining higher cycle characteristics.

The Si alloy is unevenly distributed in the negative electrode active material layer in some cases. In this case, individual sections of Si alloy exhibit different potentials and different capacities. Accordingly, some of the sections of Si alloy within the negative electrode active material layer can react with Li ions excessively, and some sections of Si alloy cannot react with Li ions. The reaction of the Si alloy within the negative electrode active material layer with Li ions can therefore occur inhomogeneously. When the sections of Si alloy that can excessively react with Li ions among the aforementioned sections of Si alloy act excessively, the electrolyte can be decomposed by significant reaction with the electrolyte, or the structure of the Si alloy can be broken by excessive expansion. As a result, when the Si alloy has excellent characteristics but is distributed unevenly, the cycle characteristics could be degraded as the negative electrode for an electric device.

However, when the Si alloy is mixed with a carbon material, the aforementioned problem can be solved. To be specific, when being mixed with a carbon material, the Si alloy can be distributed uniformly within the negative electrode active material layer. Accordingly, every section of the Si alloy within the negative electrode active material layer exhibits equal reactive properties, so that the degradation of the cycle characteristics is prevented.

When the carbon material is mixed, the content of the Si alloy in the negative electrode active material layer is reduced, and the initial capacity can be therefore reduced. However, the carbon material itself is reactive to Li ions, and the reduction of the initial capacity is relatively small. In other words, the negative electrode active material according to the embodiment exhibits a higher effect on improving the cycle characteristics than the effect on reducing the initial capacity.

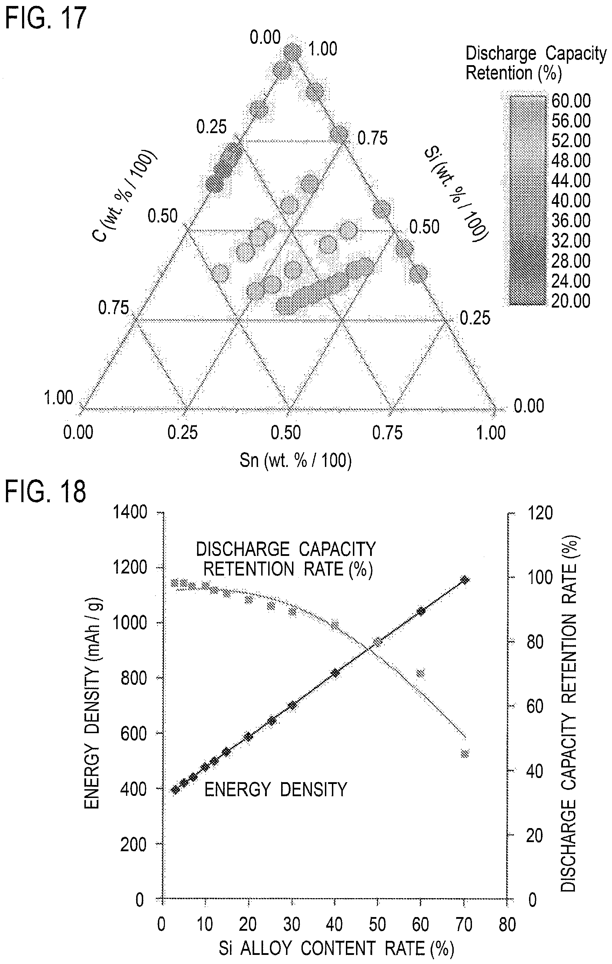

The carbon material is less likely to change in volume in the process of reacting with Li ions compared with the Si alloy. Accordingly, even when the Si alloy undergoes a large volume change, the volume change due to the reaction with Li has a relatively minor influence on the entire negative electrode active material. The aforementioned effect can be understood from the results of examples that the higher the content rate of the carbon material (the lower the content rate of the Si alloy), the higher the cycle characteristics (see Table 4 and Fig. 18).

The contained carbon material can improve the power consumption (Wh). To be specific, the carbon material has a relatively low potential compared with the Si alloy and can reduce the relatively high potential of the Si alloy. The potential of the entire negative electrode is therefore reduced, thus improving the power consumption (Wh). This effect is advantageous particularly in vehicle applications among electric devices, for example.

The shape of the carbon material is not particularly limited and can be spherical, elliptical, cylindrical, polygonal columnar, flaky, or amorphous.

The average particle diameter of the carbon material is not particularly limited but is preferably 5 to 25 $\mu$m and more preferably 5 to 10 $\mu$m. In regard to the comparison with the average particle diameter of the Si alloy, the average particle diameter of the carbon material is different from that of the Si alloy. The average particle diameter of the Si alloy is smaller than that of the carbon material. When the average particle diameter of the carbon material is larger than that of the Si alloy, particles of the carbon material are distributed homogeneously, and the Si alloy is located between the particles of the carbon material. Accordingly, the Si alloy can be therefore homogeneously located within the negative electrode active material layer.

The ratio in average particle diameter of the carbon material to the Si alloy (the average particle diameter of the Si alloy / the average particle diameter of the carbon material) is preferably not less than 1/250 and less than 1 and more preferably not less than 1/100 and not more than 1/4.

The mixing proportions of the Si alloy and the carbon material in the negative electrode active material are not particularly limited and can be properly selected in accordance with the desired intended use or the like. The content rate of the Si alloy in the negative electrode active material is preferably 3 to 70 mass%. In an embodiment, the content rate of the Si alloy in the negative electrode active material is more preferably 30 to 50 mass%. In another embodiment, the content rate of the Si alloy in the negative electrode active material is more preferably 50 to 70 mass%.

The battery can have high initial capacity when the content rate of the Si alloy is not less than 3 mass%, which is preferable. On the other hand, the battery can exhibit high cycle characteristics when the content rate of the Si alloy is not more than 70 mass%, which is preferable.

Method of Manufacturing Negative electrode active material

The negative electrode active material can be manufactured by a publicly-known method without any particular restriction. Typically, the negative electrode active material layer is formed by the aforementioned manufacturing methods of the Si alloy. To be specific, the Si alloy is produced in the form of particles by using mechanical alloying method, arc plasma melting method, or the like and is then mixed with the carbon material, binder, electrically-conductive auxiliary agent, and viscosity modifying solvent to form slurry. The slurry is used to form slurry electrodes. In this process, the negative electrode active material with a desired content of the Si alloy can be manufactured by properly changing the amount of the Si alloy in the form of particles and the amount of the carbon material.

(Common Requirements for Positive and negative electrode active material Layers 13 and 15)

Hereinafter, a description is given of common requirements for the positive and negative electrode active material layers 13 and 15.

The positive and negative electrode active material layers 13 and 15 contain a binder, an electrically-conductive auxiliary agent, an electrolyte salt (lithium salt), an ion conductive polymer, and the like.

Binder

The binder used in the active material layers is not particularly limited, and examples thereof can be the following materials: thermoplastic polymers such as polyethylene, polypropylene, polyethylene terephthalate (PET), polyethernitrile (PEN), polyacrylonitrile, polyimide, polyamide, polyamide-imide, cellulose, carboxymethyl cellulose (CMC), ethylene-vinyl acetate copolymer, polyvinylchloride, styrene-butadiene rubber (SBR), isoprene rubber, butadiene rubber, ethylene-propylene rubber, ethylene-propylene-diene copolymer, styrene-butadiene-styrene block copolymer and hydrogenated product thereof, and styrene-isoprene-styrene block copolymer and hydrogenated product thereof; fluorine resin such as polyvinylidene fluoride (PVdF), polytetrafluoroethylene (PTFE), tetrafluoroethylene-hexafluoropropylene copolymer (FEP), tetrafluoroethylene-perfluoroalkylvinyl ether copolymer (PFA), ethylene-tetrafluoroethylene copolymer (ETFE), polychlorotrifluoroethylene (PCTFE), ethylene-chlorotrifluoroethylene copolymer (ECTFE), and polyvinyl fluoride (PVF); vinylidene fluoride based fluorine rubber such as vinylidene fluoride-hexafluoropropylene based fluorine rubber (VDF-HFP based fluorine rubber), vinylidene fluoride-hexafluoropropylene-tetrafluoroethylene based fluorine rubber (VDF-HFP-TFE based fluorine rubber), vinylidene fluoride-pentafluoropropylene based fluorine rubber (VDF-PFP based fluorine rubber), vinylidene fluoride-pentafluoropropylene-tetrafluoroethylene based fluorine rubber (VDF-PFP-TFE based fluorine rubber), vinylidene fluoride-perfluoromethylvinylether-tetrafluoroethylene based fluorine rubber (VDF-PFMVE-TFE based fluorine rubber), vinylidene fluoride-chlorotrifluoroethylene based fluorine rubber (VDF-CTFE based fluorine rubber); epoxy resin; or the like. Among the aforementioned substances, polyvinylidene fluoride, polyimide, styrene-butadiene rubber, carboxymethylcellulose, polypropylene, polytetrafluoroethylene, polyacrylonitrile, polyamide, and polyamide-imide are more preferable, and polyamide is still more preferable. These preferable materials as the binder are excellent in heat resistance and have a very wide potential window. The above preferable materials as the binder are therefore stable at both of the positive electrode and negative electrode potentials and can be used in the active material layers. Moreover, the materials having relatively high binding force, such as polyamide, can suitably hold the Si alloy on the carbon material. The binder can be composed of only one or a combination of two of the aforementioned materials as the binder.

The amounts of binder contained in the active material layers are not particularly limited but need to be large enough to bind the active materials. The content of binder in the active material layers is preferably 0.5 to 15 mass% and more preferably 1 to 10 mass%.

Electrically-Conductive Auxiliary Agent

The electrically-conductive auxiliary agent is an additive blended to improve the electrical conductivity of the positive or negative electrode active material layers. The electrically-conductive auxiliary agent can be a carbon material, including carbon black such as acetylene black, graphite, and vapor-grown carbon fibers. When the active material layers contain the electrically-conductive auxiliary agent, electron networks are effectively formed within the active material layers, thus contributing an improvement in output characteristics of the battery.

Alternatively, an electrically-conductive binder functioning as both of the electrically-conductive auxiliary agent and binder may be replaced for the electrically-conductive auxiliary agent and binder or may be used together with one or both of the electrically-conductive auxiliary agent and binder. The electrically-conductive binder can be TAB-2 (Hohusen Corp.), which is already commercially available.

The content of the electrically-conductive auxiliary agent mixed into each active material layer is not less than 1 mass% of the total amount of the active material layer, preferably not less than 3 mass%, and more preferably not less than 5 mass%. The content of the electrically-conductive auxiliary agent mixed into each active material layer is not more than 15 mass% of the total amount of the active material layer, preferably not more than 10 mass%, and more preferably not more than 7 mass%. When the mixing ratio (the content) of the electrically-conductive auxiliary agent in each active material layer, in which the active material itself has low electron conductivity and electrode resistance can be reduced in accordance with the amount of the electrically-conductive auxiliary agent, is set in the aforementioned range, the following effect is exerted. It is possible to guarantee sufficient electron conductivity without inhibiting the electrode reaction and prevent reduction of energy density due to reduction of electrode density. Accordingly, the energy density can be increased by an increase in electrode density.

Electrolyte Salt (lithium salt)

The electrolyte salt (lithium salt) can be $Li(C_2F_5SO_2)_2N$, $LiPF_6$, $LiBF_4$, $LiClO_4$, $LiAsF_6$, $LiCF_3SO_3$, or the like.

Ion Conducting Polymer

The ion conductive polymer can be polyethylene oxide (PEO)-based or polypropylene oxide (PPO)-based polymer, for example.

The mixing ratios of the components contained in the positive electrode active material layer and contained in the negative electrode active material layer employing the Si alloy in the form of particles of (5)(ii) shown above are not particularly limited. The mixing ratios can be adjusted by properly referring to publicly-known findings about non-aqueous secondary batteries.

The thickness of each active material layer (the active material layer on one side of each current collector) is not particularly limited and can be determined by properly referring to conventionally-known findings about batteries. In view of the intended use (such as output power-desirable or energy-desirable applications) and the ion conductivity, as an example, the thickness of each active material layer is set to typically about 1 to 500 $\mu$m and preferably set to 2 to 100 $\mu$m.

<Current Collector>

The current collectors 11 and 12 are composed of electrically-conductive materials. The size of the current collectors is determined in accordance with the intended use of the battery. The current collectors have large area when the current collectors are used in large batteries required to have high energy density, for example.

The thickness of the current collectors is also not limited particularly. The thickness of the current collectors is typically about 1 to 100 $\mu$m.

The shape of the current collectors is also not limited particularly. In the laminated battery 10 illustrated in Fig. 1, the shape of the current collectors can be mesh (expanded grid or the like) or the like as well as current collecting foil.

When alloy thin film of the negative electrode active material is directly formed on each negative electrode current collector 12 by sputtering or the like, the current collectors are desirably composed of current collecting foil.

The materials constituting the current collectors are not particularly limited. The current collectors can be made of metal or resin which is composed of an electrically-conductive polymer material or composed of a non-electrically-conductive polymer material with an electrically-conductive filler added thereto, for example.

To be specific, the metal of the current collectors can be aluminum, nickel, iron, stainless, titanium, copper, or the like. In addition to these materials, metal clad of nickel and aluminum, metal clad of copper and aluminum, plated materials of the same combinations, and the like are preferably used. Alternatively, the current collectors may be composed of foil with the metal surface thereof coated with aluminum. Among these materials, aluminum, stainless, copper, and nickel are preferable from the viewpoint of electron conductivity, battery operating potential, adherence of the negative electrode active material to the current collectors by sputtering, and the like.

Examples of the electrically-conductive polymer material include polyaniline, polypyrrole, polythiophene, polyacetylene, polyparaphenylene, polyphenylenevinylene, polyacrylonitrile, and polyoxadiazole. These electrically-conductive polymer materials exhibit sufficient conductivity with no electrically-conductive filler added thereto and therefore have advantages of simplifying the manufacturing process and reducing the weight of the current collectors.

Examples of the non-electrically-conductive polymer material include polyethylene (PE: high-density polyethylene (HDPE), low-density polyethylene (LDPE), and the like), polypropylene (PP), polyethylene terephthalate (PET), polyethernitrile (PEN), polyimide (PI), polyamide-imide (PAI), polyamide (PA), polytetrafluoroethylene (PTFE), styrene-butadiene rubber (SBR), polyacrylonitrile (PAN), polymethylacrylate (PMA), polymethylmethacrylate (PMMA), polyvinylchloride (PVC), polyvinylidene fluoride (PVdF), and polystyrene (PS). These non-electrically-conductive polymer materials can be excellent in resistance to electric potential or resistance to solvent.

To the aforementioned electrically-conductive and non-electrically-conductive polymer materials, an electrically-conductive filler can be added if necessary. When the resin constituting the base material of the current collectors is composed of only a non-electrically-conductive polymer in particular, an electrically-conductive filler needs to be added to give conductivity to the resin.

The electrically-conductive filler can be used without any particular restriction but needs to be an electrically-conductive substance. For example, the electrically-conductive filler can be metal, electrically-conductive carbon, or the like as materials excellent in conductivity, potential resistance, or lithium ion blocking properties, for example. The metal as the electrically-conductive filler is not particularly limited but is preferably at least a kind of metal selected from the group consisting of Ni, Ti, Al, Cu, Pt, Fe, Cr, Sn, Zn, In, Sb, K, and alloys and metal oxides including the same. The electrically-conductive carbon as the electrically-conductive filler is not particularly limited and preferably contains at least a kind of carbon selected from the group consisting of acetylene black, Vulcan, black pearl, carbon nanofibers, Ketjenblack, carbon nanotubes, carbon nanohones, carbon nanoballoons, and fullerene.

The amount of electrically-conductive filler added is not particularly limited but needs to be large enough to give sufficient conductivity to the current collectors, which is generally about 5 to 35 mass%.

<Electrolyte Layer>

The electrolyte constituting the electrolyte layer 17 can be a liquid or polymer electrolyte.

The liquid electrolyte has a configuration in which a lithium salt (an electrolyte salt) is dissolved in an organic solvent. Examples of the organic solvent include carbonates such as ethylene carbonate (EC), propylene carbonate (PC), butylene carbonate (BC), vinylene carbonate (VC), dimethyl carbonate (DMC), diethyl carbonate (DEC), ethylmethyl carbonate (EMC), or methylpropyl carbonate (MPC).

The lithium salt can be a compound that can be added to the active material layers of the electrodes such as $Li(CF_3SO_2)_2N$, $Li(C_2F_5SO_2)_2N$, $LiPF_6$, $LiBF_4$, $LiAsF_6$, $LiTaF_6$, $LiClO_4$, or $LiCF_3SO_3$.

On the other hand, the polymer electrolytes are classified to gel electrolytes including electrolytic solution and intrinsic polymer electrolytes not including electrolytic solution.

The gel electrolytes have a configuration in which the aforementioned liquid electrolyte (electrolytic solution) is injected into a matrix polymer composed of ion-conductive polymer. Using a gel polymer electrolyte as the electrolyte is excellent because the lack of fluidity of the electrolyte can facilitate blocking ion conduction between layers.

The ion conductive polymer used as the matrix polymer is polyethylene oxide (PEO), polypropylene oxide (PPO), copolymers thereof, or the like, for example. In the above polyalkylene oxide, electrolyte salt such as lithium salt is well soluble.

The proportion of the aforementioned liquid electrolyte (electrolytic solution) in the gel electrolyte should not be particularly limited but is desirably about several to 90 mass% from the viewpoint of ion conductivity and the like. In the embodiment, the gel electrolyte containing a lot of electrolytic solution (the proportion thereof is not less than 70 mass%) is particularly effective.

When the electrolyte layer is composed of liquid electrolyte, gel electrolyte, or intrinsic polymer electrolyte, the electrolyte layer may include a separator. Examples of the specific configuration of the separator (including non-woven fabric) are microporous membrane composed of olefin, such as polyethylene and polypropylene, porous plates, non-woven fabric, and the like.

Intrinsic polymer electrolytes have a configuration in which supporting salt (lithium salt) is dissolved in the matrix polymer and does not contain any organic solvent as a plasticizer. Accordingly, when the electrolyte layers are composed of an intrinsic polymer electrolyte, there is no fear of liquid leakage from the battery, thus increasing the reliability of the battery.

The matrix polymer of gel electrolytes or intrinsic polymer electrolytes can exert excellent mechanical strength by forming a cross-linked structure. To form a cross-linked structure, by using an adequate polymerization initiator, a polymerizable polymer (PEO or PPO, for example) for forming polymer electrolyte is subjected to polymerization such as thermal polymerization, ultraviolet polymerization, radiation polymerization, or electron beam polymerization.

<Current Collecting Plate and Lead>

Current collecting plates may be used for the purpose of extracting current out of the battery. The current collecting plates are electrically connected to the current collectors and leads and protrude out of the laminated sheets as the battery exterior member.

The materials constituting the current collecting plates are not particularly limited and can be publicly-known highly-electrically-conductive material conventionally used as current collecting plates for lithium ion secondary batteries. The material constituting the current collecting plates is preferably a metallic material such as aluminum, copper, titanium, nickel, stainless steel (SUS), or alloys thereof and is more preferably, aluminum, copper, or the like from the viewpoint of light weight, corrosion resistance, and high conductivity. The positive and negative electrode current collecting plates may be made of a same material or different materials.

The positive and negative electrode terminal leads are also used when needed. The positive and negative electrode terminal leads can be composed of terminal leads used in publicly-known lithium ion secondary batteries. It is preferable that the parts of the terminal leads protruding out of the battery exterior member 29 are covered with heat-resistant insulating heat-shrinkable tubes so that electric leakage due to contact with peripheral devices and wires cannot influence products (for example, automobile components, particularly, electronic devices).

<Battery Exterior Member>

The battery exterior member 29 can be composed of a publicly-known metallic can casing or a bag-shaped casing which can cover the power generation element and is made of aluminum-contained laminated film. The laminated film can be a three-layer laminated film composed of PP, aluminum, and nylon stacked in this order, for example, but is not limited to the thus-configured film. The battery exterior member 29 is preferably made of laminated film for the laminated film is excellent in resistance to high output power and cooling performance and can be suitably used in batteries of large devices for EVs, HEVs, and the like.

The above-described lithium ion secondary battery can be manufactured by a conventionally-known manufacturing method.

<Exterior Configuration of Lithium Ion Secondary Battery>

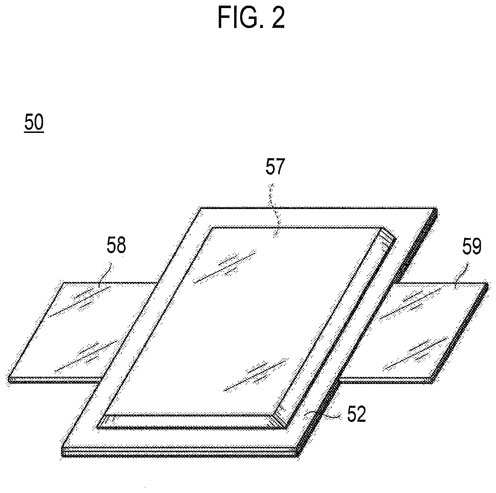

Fig. 2 is a perspective view illustrating an exterior of a laminated-type flat lithium ion secondary battery.

As illustrated in Fig. 2, a laminated-type flat lithium ion secondary battery 50 has a rectangular flat shape. From both sides of the battery 50, positive and negative electrode current collecting plates 58 and 59 for extracting electric power are protruded. A power generation element 57 is wrapped with a battery exterior member 52 of the lithium ion secondary battery 50, and the edge thereof is thermally fused. The power generation element 57 is sealed with the positive and negative electrode current collecting plates 58 and 59 protruded to the outside. Herein, the power generation element 57 corresponds to the power generation element 21 of the lithium ion secondary battery (laminated battery) 10 illustrated in Fig. 1. The power generation element 57 includes plural single cell layers (single cells) 19, each of which includes a positive electrode (a positive electrode active material layer) 13, an electrolyte layer 17, and a negative electrode (a negative electrode active material layer) 15.

The aforementioned lithium ion secondary battery is not limited to batteries having a laminated-type flat shape (laminate cells). The winding-type lithium batteries are not particularly limited and may include batteries having a cylindrical shape (coin cells), batteries having a prism shape (rectangular cells), batteries having a rectangular flat shape like deformed cylindrical batteries, and also cylinder cells. In cylindrical or prism-shaped lithium ion secondary batteries, the package may be composed of either laminated film or a conventional cylindrical can (metallic can) and is not limited particularly. Preferably, the power generation element is packed with aluminum laminated film. Such configuration can reduce the weight of the lithium ion secondary battery.

The protrusion configuration of the positive and negative electrode current collecting plates 58 and 59 illustrated in Fig. 2 is also not limited particularly. The positive and negative electrode current collecting plates 58 and 59 may be protruded from a same side or may be individually divided into plural portions to be protruded from different sides. The protrusion of the positive and negative electrode current collecting plates 58 and 59 is not limited to the configuration illustrated in Fig. 2. Moreover, in winding-type lithium ion batteries, terminals may be formed using a cylindrical can (a metallic can), for example, instead of the current collecting plates.

As described above, negative electrodes and lithium ion secondary batteries employing the negative electrode active material for a lithium ion secondary battery of the embodiment can be suitably used as high-capacity power sources of electric vehicles, hybrid electric vehicles, fuel cell vehicles, hybrid fuel cell vehicles, and the like. The negative electrodes and lithium ion secondary batteries employing the negative electrode active material for a lithium ion secondary battery of the embodiment can be thus suitably used in vehicle driving power source and auxiliary power source requiring high energy density per volume and high power density per volume.

The aforementioned embodiment shows the lithium ion batteries as the electric device by way of example but is not limited thereto. The embodiment is applicable to another type of secondary batteries and is also applicable to primary batteries. Moreover, the embodiment is applicable to capacitors as well as batteries.

EXAMPLES

The present invention is described in more detail using examples below. The technical scope of the invention is not limited to the examples shown below.

First, performance evaluation is performed for Si alloy which is expressed by formula (1) and constitutes the negative electrode for an electric device according to the present invention as reference examples.

(Reference example A) Performance Evaluation of $Si_xSn_yAl_zA_a$ - not falling under the scope of the present invention

[1] Preparation of Negative electrode

Thin films made of the negative electrode active material alloys having different compositions are formed on substrates (current collectors) composed of 20 μm-thick nickel foil under the following conditions by using an independently controllable ternary DC magnetron sputtering apparatus (manufactured by Yamato-Kiki Industrial Co., Ltd.; combinatorial sputter coating apparatus; gun-sample distance: approximately 100 mm) as a sputtering apparatus. 23 types of negative electrode samples are thus obtained in total (reference examples 1 to 14 and comparative reference examples 1 to 9).

(1) Target (manufactured by Kojundo Chemical Lab. Co., Ltd., purity: 4N)

    Si: 50.8 mm diameter, 3 mm thick (with a 2 mm-thick oxygen-free copper backing plate)
    Sn: 50.8 mm diameter, 5 mm thick
    Al: 50.8 mm diameter, 3 mm thick

(2) Film Formation Condition

    Base pressure: to $7 \times 10^{-6}$ Pa
    Sputtering gas species: Ar (99.9999% or more)
    Flow rate of introduced sputtering gas: 10 sccm
    Sputtering pressure: 30 mTorr
    DC power supply: Si (185 W), Sn (0 to 40 W), Al (0 to 150 W)
    Pre-sputtering time: 1 min.
    Sputtering time: 10 min.
    Substrate Temperature: Room Temperature (25°C)

To be specific, amorphous-phase alloy thin films are formed on Ni substrates with the sputtering time fixed to 10 minutes and the power of the DC power supply varied in the aforementioned ranges using the Si, Sn, and Al targets described above, thus obtaining negative electrode samples provided with alloy thin films having various compositions.

Some examples in sample preparation are shown below. In reference example 4, DC power supply 1 (Si target) is set to 185 W; DC power supply 2 (Sn target) is set to 25 W; and DC power supply 3 (Al target) is set to 130 W. In comparative reference example 2, DC power supply 1 (Si target) is set to 185 W; DC power supply 2 (Sn target) is set to 30 W; and DC power supply 3 (Al target) is set to 0 W. In comparative reference example 5, DC power supply 1 (Si target) is set to 185 W; DC power supply 2 (Sn target) is set to 0 W; and DC power supply 3 (Al target) is set to 78 W.

The component compositions of the aforementioned alloy thin films are shown in Table 1 and Figs. 3 to 6. The obtained alloy thin films are analyzed by the following analysis process and apparatus.

(3) Analysis Method

    Composition Analysis: SEM·EDX analysis (manufactured by JEOL Ltd.), EPMA analysis (manufactured by JEOL Ltd.)
    Film thickness measurement (for calculating sputtering rate): film thickness meter (manufactured by Tokyo Instruments, Inc.)
    Film state analysis: Raman spectrometry (manufactured by Bruker Corporation)

[2] Preparation of Battery

Each of the negative electrode samples obtained by the aforementioned method is placed facing a counter electrode composed of lithium foil (manufactured by Honjo Metal Co., Ltd.; diameter: 15 mm; thickness: 200 μm) with a separator (Celgard 2400 manufactured by Celgard, LLC.) interposed therebetween, and then electrolytic solution is injected to produce a CR2032 coin cell.

The aforementioned electrolytic solution is obtained by dissolving $LiPF_6$ (lithium hexafluorophosphate) in a non-aqueous solvent mixture to a concentration of 1 M. The non-aqueous solvent mixture is composed of ethylene carbonate (EC) and diethyl carbonate (DEC) which are mixed at a volume ratio of 1 to 1.

[3] Battery charge-discharge test

Each battery obtained by the aforementioned method is subjected to the following charge-discharge test.
In a thermostat bath (PFU-3K by ESPEC Corp.) set to a temperature of 300 K (27°C), each prepared coin cell is charged from 2 V to 10 mV with a current of 0.1 mA in constant-current and constant-voltage mode in the charge process (a process of inserting Li into negative electrodes as the evaluation target) by using a charge-discharge tester (HJ0501SM8A by HOKUTO DENKO Corp.). Thereafter, at the discharge process (the process of releasing Li from the negative electrodes), the coin cell is discharged from 10 mV to 2V in constant-current mode with a current of 0.1 mA. The aforementioned charge and discharge, which are considered as one cycle, are repeated 100 times.
The discharge capacities at the 50th and 100th cycles are calculated, and the retention rates at the 50th and 100th cycles to the discharge capacity at the first cycle are calculated. The results are shown together in Table 1. The discharge capacity is shown by a value calculated per alloy weight. The "discharge capacity (mAh/g)" is a value per weight of pure Si or alloy and represents a capacity when Li reacts with the Si-Sn-M alloys (Si-Sn alloy, pure Si, or Si-Sn alloy). The "initial capacity" described in the specification corresponds to the discharge capacity (mAh/g) at the initial cycle (the first cycle).
The "discharge capacity retention rate (%)" at the 50th or 100th cycle represents an index showing what capacity is retained from the initial capacity. The equation to calculate the discharge capacity retention rate (%) is as follows.

[Math. 1]

$$\text{Discharge capacity retention rate (\%)} = [\text{discharge capacity at 50th or 100th cycle}] / [\text{discharge capacity at first cycle}] \times 100$$

[Table 1-1]

| | COMPOSITION | | | First cycle | 50th cycle | 100th cycle |
|---|---|---|---|---|---|---|
| | Si (%) | Sn (%) | Al (%) | Discharge capacity (mAh/g) | Discharge capacity retention rate (%) | Discharge capacity retention rate (%) |
| Reference Example 1 | 50 | 19 | 31 | 1753 | 92 | 55 |
| Reference Example 2 | 45 | 17 | 38 | 1743 | 93 | 57 |
| Reference Example 3 | 42 | 16 | 42 | 1720 | 95 | 58 |
| Reference Example 4 | 41 | 16 | 43 | 1707 | 95 | 61 |
| Reference Example 5 | 44 | 35 | 21 | 2077 | 95 | 55 |
| Reference Example 6 | 42 | 33 | 25 | 1957 | 93 | 55 |
| Reference Example 7 | 38 | 29 | 33 | 1949 | 93 | 55 |
| Reference Example 8 | 37 | 29 | 34 | 1939 | 93 | 56 |
| Reference Example 9 | 36 | 28 | 36 | 1994 | 94 | 60 |
| Reference Example 10 | 37 | 45 | 18 | 2004 | 96 | 56 |

(continued)

| | COMPOSITION | | | First cycle | 50th cycle | 100th cycle |
|---|---|---|---|---|---|---|
| | Si (%) | Sn (%) | Al (%) | Discharge capacity (mAh/g) | Discharge capacity retention rate (%) | Discharge capacity retention rate (%) |
| Reference Example 11 | 35 | 41 | 24 | 1996 | 95 | 55 |
| Reference Example 12 | 34 | 41 | 25 | 1985 | 95 | 56 |
| Reference Example 13 | 33 | 40 | 27 | 1893 | 96 | 56 |
| Reference Example 14 | 31 | 38 | 31 | 1880 | 96 | 62 |

In Table 1-1, Reference Examples 1 to 14 do not fall under the scope of the present invention.

[Table 1-2]

| | COMPOSITION | | | First cycle | 50th cycle | 100th cycle |
|---|---|---|---|---|---|---|
| | Si (%) | Sn (%) | Al (%) | Discharge capacity (mAh/g) | Discharge capacity retention rate (%) | Discharge capacity retention rate (%) |
| Comparative Reference Example 1 | 100 | 0 | 0 | 3232 | 47 | 22 |
| Comparative Reference Example 2 | 56 | 44 | 0 | 1817 | 91 | 42 |
| Comparative Reference Example 3 | 45 | 55 | 0 | 1492 | 91 | 42 |
| Comparative Reference Example 4 | 38 | 62 | 0 | 1325 | 91 | 42 |
| Comparative Reference Example 5 | 61 | 0 | 39 | 1747 | 41 | 39 |
| Comparative Reference Example 6 | 72 | 0 | 28 | 2119 | 45 | 38 |
| Comparative Reference Example 7 | 78 | 0 | 22 | 2471 | 45 | 27 |
| Comparative Reference Example 8 | 87 | 0 | 13 | 2805 | 44 | 17 |

(continued)

| | COMPOSITION | | | First cycle | 50th cycle | 100th cycle |
|---|---|---|---|---|---|---|
| | Si (%) | Sn (%) | Al (%) | Discharge capacity (mAh/g) | Discharge capacity retention rate (%) | Discharge capacity retention rate (%) |
| Comparative Reference Example 9 | 97 | 0 | 3 | 3031 | 47 | 17 |

Table 1 reveals that the batteries of reference examples 1 to 14 are excellent in balance between the discharge capacity at the first cycle and the discharge capacity retention rates at the 50th and 100th cycles. To be specific, it is revealed that the balance is excellent when the content of Si is not less than 12 mass% and less than 100 mass%, the content of Sn is more than 0 mass% and not more than 45 mass%, and the content of Al is more than 0 mass% and not more than 43 mass%. On the other hand, it is revealed that some batteries of comparative reference examples 1 to 9 have larger discharge capacities at the first cycle than those of the batteries of reference examples but the discharge capacity retention rates thereof are significantly reduced.

The above results are summarized as follows with regard to the batteries of the reference examples employing as the negative electrode active material, the Si-Sn-Al alloys with the contents of the components set in the respective ranges specified in the invention. The thus-configured batteries have high initial capacities of more than 1700 mAh/g and exhibit a discharge capacity retention rate of not less than 92% at the 50th cycle and not less than 55% even at the 100th cycle. It is therefore confirmed that the batteries are excellent in balance between the capacity and the cycle durability. On the other hand, as for the batteries of comparative reference examples, the numerical values of the initial capacity and cycle durability are both lower than those of the reference examples. The batteries employing alloys close to pure Si, in particular, are found to have a tendency of having high capacity but exhibiting low cycle durability. Moreover, the batteries employing alloys of a high Si content have a tendency of having comparatively excellent cycle characteristics but having low initial capacity.

(Reference example B): Performance Evaluation of $Si_xSn_yV_zA_a$

[1] Preparation of Negative electrode

32 types of negative electrode samples are prepared in total (reference examples 15 to 27 and comparative reference examples 10 to 28) by the same method as that of reference example 1 excepting that the "Al: 50.8 mm diameter, 3 mm thick" of the target in (1) of reference example 1 is replaced with "V: 50.8 mm diameter, 3 mm thick"; and "Sn (0 to 40 W), Al (0 to 150 W)" in (2) of the DC power supply is replaced with "Sn (0 to 50 W), V (0 to 150 W)".

Some examples of the aforementioned (2) in sample preparation are shown below. In reference example 25, DC power supply 1 (Si target) is set to 185 W; DC power supply 2 (Sn target) is set to 30 W; and DC power supply 3 (V target) is set to 140 W. In comparative reference example 19, DC power supply 1 (Si target) is set to 185 W; DC power supply 2 (Sn target) is set to 30 W; and DC power supply 3 (V target) is set to 0 W. In comparative reference example 25, DC power supply 1 (Si target) is set to 185 W; DC power supply 2 (Sn target) is set to 0 W; and DC power supply 3 (V target) is set to 80 W.

The component compositions of the aforementioned alloy thin films are shown in Table 2 and Figs. 7 to 10.

[2] Preparation of Battery

CR2032 coin cells are prepared by the same method as that of reference example 1.

[3] Battery Charge-discharge Test

The battery charge-discharge test is performed in the same manner as that of the reference example 1.

[Table 2-1]

| | COMPOSITION | | | First cycle | 50th cycle | 100th cycle |
|---|---|---|---|---|---|---|
| | Si (%) | Sn (%) | V (%) | Discharge capacity (mAh/g) | Discharge capacity retention rate (%) | Discharge capacity retention rate (%) |
| Reference Example 15 | 43 | 34 | 23 | 1532 | 93 | 47 |
| Reference Example 16 | 37 | 29 | 32 | 1316 | 92 | 46 |
| Reference Example 17 | 33 | 26 | 41 | 1087 | 92 | 49 |
| Reference Example 18 | 27 | 21 | 52 | 832 | 92 | 46 |
| Reference Example 19 | 32 | 39 | 29 | 1123 | 92 | 47 |
| Reference Example 20 | 29 | 35 | 36 | 1023 | 93 | 48 |
| Reference Example 21 | 52 | 20 | 28 | 1682 | 92 | 45 |
| Reference Example 22 | 44 | 17 | 39 | 1356 | 92 | 47 |
| Reference Example 23 | 38 | 14 | 48 | 1103 | 93 | 48 |
| Reference Example 24 | 34 | 13 | 53 | 931 | 93 | 50 |
| Reference Example 25 | 30 | 11 | 59 | 821 | 94 | 51 |
| Reference Example 26 | 27 | 10 | 63 | 712 | 92 | 44 |
| Reference Example 27 | 31 | 63 | 6 | 1135 | 92 | 46 |

[Table 2-2]

| | COMPOSITION | | | First cycle | 50th cycle | 100th cycle |
|---|---|---|---|---|---|---|
| | Si (%) | Sn (%) | V (%) | Discharge capacity (mAh/g) | Discharge capacity retention rate (%) | Discharge capacity retention rate (%) |
| Comparative Reference Example 10 | 25 | 19 | 56 | 749 | 89 | 36 |
| Comparative Reference Example 11 | 24 | 29 | 47 | 795 | 90 | 38 |
| Comparative Reference Example 12 | 22 | 27 | 51 | 680 | 86 | 28 |
| Comparative Reference Example 13 | 25 | 52 | 23 | 872 | 88 | 34 |
| Comparative Reference Example 14 | 23 | 48 | 29 | 809 | 88 | 33 |
| Comparative Reference Example 15 | 22 | 44 | 34 | 733 | 86 | 28 |
| Comparative Reference Example 16 | 20 | 41 | 39 | 685 | 78 | 18 |
| Comparative Reference Example 17 | 19 | 38 | 43 | 563 | 73 | 11 |
| Comparative Reference Example 18 | 100 | 0 | 0 | 3232 | 47 | 22 |
| Comparative Reference Example 19 | 56 | 44 | 0 | 1817 | 91 | 42 |
| Comparative Reference Example 20 | 45 | 55 | 0 | 1492 | 91 | 42 |
| Comparative Reference Example 21 | 38 | 62 | 0 | 1325 | 91 | 42 |
| Comparative Reference Example 22 | 65 | 0 | 35 | 1451 | 85 | 40 |
| Comparative Reference Example 23 | 53 | 0 | 47 | 1182 | 85 | 42 |
| Comparative Reference Example 24 | 45 | 0 | 55 | 986 | 83 | 39 |

(continued)

| | COMPOSITION | | | First cycle | 50th cycle | 100th cycle |
|---|---|---|---|---|---|---|
| | Si (%) | Sn (%) | V (%) | Discharge capacity (mAh/g) | Discharge capacity retention rate (%) | Discharge capacity retention rate (%) |
| Comparative Reference Example 25 | 34 | 0 | 66 | 645 | 90 | 44 |
| Comparative Reference Example 26 | 30 | 0 | 70 | 564 | 88 | 44 |
| Comparative Reference Example 27 | 27 | 0 | 73 | 495 | 86 | 36 |
| Comparative Reference Example 28 | 25 | 0 | 75 | 366 | 86 | 39 |

Table 2 reveals that the batteries of the reference examples are excellent in balance between the discharge capacity at the first cycle and the discharge capacity retention rates at the 50th and 100th cycles. To be specific, it is revealed that the balance is excellent when the content of Si is not less than 27 mass% and less than 100 mass%, the content of Sn is more than 0 mass% and not more than 73 mass%, and the content of V is more than 0 mass% and not more than 73 mass%. On the other hand, it is revealed that some batteries of the comparative reference examples have larger discharge capacities at the first cycle than those of the reference examples but the discharge capacity retention rates thereof are significantly reduced.

The above results are summarized as follows with regard to the batteries of the reference examples. It is confirmed that the thus-configured batteries have high initial capacities of not less than 712 mAh/g and exhibit discharge capacity retention rates of not less than 92% after 50 cycles and not less than 44% even after 100 cycles.

(Reference example C): Performance Evaluation of $Si_xSn_yC_zA_a$ - not falling under the scope of the present invention

[1] Preparation of Negative electrode

34 types of negative electrode samples are prepared in total (reference examples 28 to 49 and comparative reference examples 29 to 40) by the same method as that of reference example 1 excepting that the "Al: 50.8 mm diameter, 3 mm thick" of the target in (1) of reference example 1 is replaced with "C: 50.8 mm diameter, 3 mm thick (with a 2 mm-thick oxygen-free backing plate)"; and "Al (0 to 150 W)" of the DC power supply in (2) is replaced with "C (0 to 150 W)".

Some examples of the aforementioned (2) in sample preparation are shown below. In reference example 43, DC power supply 1 (Si target) is set to 185 W; DC power supply 2 (Sn target) is set to 35 W; and DC power supply 3 (C target) is set to 110 W. In comparative reference example 30, DC power supply 1 (Si target) is set to 185 W; DC power supply 2 (Sn target) is set to 22 W; and DC power supply 3 (C target) is set to 0 W. In comparative reference example 35, DC power supply 1 (Si target) is set to 185 W; DC power supply 2 (Sn target) is set to 0 W; and DC power supply 3 (C target) is set to 30 W.

The component compositions of the aforementioned alloy thin films are shown in Table 3 and Fig. 11.

[2] Preparation of Battery

CR2032 coin cells are prepared by the same method as that of reference example 1.

[3] Battery Charge-discharge Test

The battery charge-discharge test is performed in the same manner as that of reference example 1. The results are shown together in Table 3.

[Table 3-1]

| | COMPOSITION | | | First cycle | 50th cycle | 100th cycle |
|---|---|---|---|---|---|---|
| | Si (%) | Sn (%) | C (%) | Discharge capacity (mAh/g) | Discharge capacity retention rate (%) | Discharge capacity retention rate (%) |
| Reference Example 28 | 63 | 23 | 14 | 2134 | 92 | 45 |
| Reference Example 29 | 57 | 21 | 22 | 2005 | 92 | 47 |
| Reference Example 30 | 50 | 19 | 31 | 1632 | 92 | 48 |
| Reference Example 31 | 48 | 18 | 34 | 1628 | 92 | 49 |
| Reference Example 32 | 44 | 17 | 39 | 1571 | 92 | 50 |
| Reference Example 33 | 38 | 14 | 48 | 1262 | 92 | 51 |
| Reference Example 34 | 50 | 39 | 11 | 1710 | 92 | 48 |
| Reference Example 35 | 46 | 36 | 18 | 1582 | 96 | 49 |
| Reference Example 36 | 39 | 31 | 30 | 1310 | 95 | 52 |
| Reference Example 37 | 35 | 28 | 37 | 1250 | 92 | 52 |
| Reference Example 38 | 33 | 25 | 42 | 1089 | 92 | 52 |
| Reference Example 39 | 40 | 48 | 12 | 1741 | 97 | 55 |
| Reference Example 40 | 39 | 46 | 15 | 1685 | 98 | 56 |
| Reference Example 41 | 36 | 44 | 20 | 1583 | 97 | 57 |

(continued)

|  | COMPOSITION | | | First cycle | 50th cycle | 100th cycle |
|---|---|---|---|---|---|---|
|  | Si (%) | Sn (%) | C (%) | Discharge capacity (mAh/g) | Discharge capacity retention rate (%) | Discharge capacity retention rate (%) |
| Reference Example 42 | 35 | 43 | 22 | 1525 | 96 | 55 |
| Reference Example 43 | 34 | 41 | 25 | 1466 | 99 | 60 |
| Reference Example 44 | 33 | 40 | 27 | 1456 | 97 | 57 |
| Reference Example 45 | 32 | 39 | 29 | 1423 | 96 | 57 |
| Reference Example 46 | 32 | 38 | 30 | 1403 | 97 | 58 |
| Reference Example 47 | 31 | 37 | 32 | 1381 | 98 | 60 |
| Reference Example 48 | 29 | 35 | 36 | 1272 | 97 | 60 |
| Reference Example 49 | 29 | 34 | 37 | 1184 | 98 | 59 |

In Table 3-1, Reference Examples 28 to 49 do not fall under the scope of the present invention.

[Table 3-2]

|  | COMPOSITION | | | First cycle | 50th cycle | 100th cycle |
|---|---|---|---|---|---|---|
|  | Si (%) | Sn (%) | C (%) | Discharge capacity (mAh/g) | Discharge capacity retention rate (%) | Discharge capacity retention rate (%) |
| Comparative Reference Example 29 | 100 | 0 | 0 | 3232 | 47 | 22 |
| Comparative Reference Example 30 | 89 | 11 | 0 | 3149 | 78 | 36 |
| Comparative Reference Example 31 | 77 | 23 | 0 | 2622 | 84 | 38 |
| Comparative Reference Example 32 | 56 | 44 | 0 | 1817 | 91 | 42 |

(continued)

| | COMPOSITION | | | First cycle | 50th cycle | 100th cycle |
|---|---|---|---|---|---|---|
| | Si (%) | Sn (%) | C (%) | Discharge capacity (mAh/g) | Discharge capacity retention rate (%) | Discharge capacity retention rate (%) |
| Comparative Reference Example 33 | 45 | 55 | 0 | 1492 | 91 | 42 |
| Comparative Reference Example 34 | 38 | 62 | 0 | 1325 | 91 | 42 |
| Comparative Reference Example 35 | 95 | 0 | 5 | 3284 | 58 | 37 |
| Comparative Reference Example 36 | 84 | 0 | 16 | 3319 | 64 | 38 |
| Comparative Reference Example 37 | 72 | 0 | 28 | 3319 | 51 | 29 |
| Comparative Reference Example 38 | 70 | 0 | 30 | 3409 | 68 | 33 |
| Comparative Reference Example 39 | 67 | 0 | 33 | 3414 | 54 | 27 |
| Comparative Reference Example 40 | 63 | 0 | 37 | 3360 | 59 | 27 |

As a result, it is confirmed that the batteries of the reference examples employing as the negative electrode active material, Si-Sn-C alloys in which the content of Si is not less than 29 mass% and the rest is composed of Sn, C, and inevitable impurities have high initial capacities of more than at least 1000 mAh/g and exhibit discharge capacity retention rates of not less than 92% after 50 cycles and not less than 45% even after 100 cycles.

Next, as examples, performance evaluation is performed for the negative electrodes for an electric device including the negative electrode active material composed of a mixture of graphite and $Si_{41}Sn_{16}Al_{43}$ among the afore-mentioned Si alloys (corresponding to reference example 4).

The alloys used herein other than $Si_{41}Sn_{16}Al_{43}$ ($Si_xSn_yAl_zA_a$, $Si_xSn_yV_zA_a$, and $Si_xSn_yC_zA_a$ except $Si_{41}Sn_{16}Al_{43}$) show the same or similar results to the examples described below employing $Si_{41}Sn_{16}Al_{43}$. The reason therefor is that the other alloys have similar characteristics to those of $Si_{41}Sn_{16}Al_{43}$ as shown by the reference examples. In the case of using alloys having similar characteristics, the same results can be obtained even if the alloy type is different.

(Example 1) for reference

[Preparation of Si alloy]

The Si alloy is produced by mechanical alloying (or arc plasma melting). To be specific, in a planetary ball mill P-6 (by FRITCSH in German), powder of the raw materials of each alloy is put into a zirconia pulverizing pot together with zirconia pulverization balls to be alloyed at 600 rpm for 48 h.

[Preparation of Negative electrode]

2.76 parts by mass of the Si alloy ($Si_{41}Sn_{16}Al_{43}$, particle diameter: 0.3 $\mu$m) prepared above and 89.24 parts by mass of graphite (average particle diameter: 22 $\mu$m) as the negative electrode active material, 4 parts by mass of acetylene black as the electrically-conductive auxiliary agent, and 4 parts by mass of polyimide as the binder are mixed and dispersed in N-methylpyrrolidone to form negative electrode slurry. Subsequently, the obtained negative electrode slurry is evenly applied on both sides of a 10 $\mu$m-thick negative electrode current collector made of copper foil so that the negative electrode active material layers have a thickness of 30 $\mu$m. The thus-obtained product is dried in vacuum for 24 hours, thus producing a negative electrode. The content rate of Si alloy in the negative electrode active material is 3%.

[Preparation of Positive electrode]

$Li_{1.85}Ni_{0.18}Co_{0.10}Mn_{0.87}O_3$ as the positive electrode active material is prepared by a method described in Example 1 (Paragraph 0046) of Japanese Unexamined Patent Application Publication No. 2012-185913. 90 parts by mass of the prepared positive electrode active material, 5 parts by mass of acetylene black as the electrically-conductive auxiliary agent, and 5 parts by mass of polyvinylidene fluoride as the binder are mixed and the dispersed in N-methylpyrrolidone into positive electrode slurry. The obtained positive electrode slurry is then evenly applied to both sides of a 20 $\mu$m-thick positive electrode current collector made of aluminum foil so that the positive electrode active material layers have thicknesses of 30 $\mu$m, followed by drying, thus obtaining a positive electrode.

[Preparation of Battery]

The positive electrode and negative electrode prepared as described above are placed facing each other with a separator (microporous film made of polypropylene with a thickness of 20 $\mu$m) provided therebetween. The layered product of the negative electrode, separator, and positive electrode is placed in the bottom portion of a coin cell (CR2032, made of stainless steel (SUS316)). Moreover, a gasket is attached to the same to keep the positive electrode and negative electrode isolated from each other; the electrolytic solution described below is injected through a syringe; a spring and a spacer are stacked thereon; the upper portion of the coin cell is laid thereon and caulked to be sealed, thus obtaining a lithium ion secondary battery.

The electrolytic solution is a solution obtained by dissolving lithium hexafluorophosphate ($LiPF_6$) as the supporting salt in an organic solvent to a concentration of 1 mol/L. The organic solvent is a mixture of ethylene carbonate (EC) and diethylene carbonate (DEC) in a volume ratio of 1/2 (EC/DEC).

(Example 2) for reference

A negative electrode and a battery are prepared by the same method as that of Example 1 excepting that the amount of Si alloy is changed to 4.6 parts by mass and the amount of graphite is changed to 87.4 parts by mass. The content rate of the Si alloy in the negative electrode active material is 5%.

(Example 3) for reference

A negative electrode and a battery are prepared by the same method as that of Example 1 excepting that the amount of Si alloy is changed to 6.44 parts by mass and the amount of graphite is changed to 85.56 parts by mass. The content rate of the Si alloy in the negative electrode active material is 7%.

(Example 4) for reference

The negative electrode and battery are prepared by the same method as that of Example 1 excepting that the amount of Si alloy is changed to 9.2 parts by mass and the amount of graphite is changed to 82.8 parts by mass. The content rate of the Si alloy in the negative electrode active material is 10%.

(Example 5) for reference

The negative electrode and battery are prepared by the same method as that of Example 1 excepting that the amount of Si alloy is changed to 11.04 parts by mass and the amount of graphite is changed to 80.96 parts by mass. The content rate of the Si alloy in the negative electrode active material is 12%.

(Example 6) for reference

The negative electrode and battery are prepared by the same method as that of Example 1 excepting that the amount of Si alloy is changed to 13.8 parts by mass and the amount of graphite is changed to 78.2 parts by mass. The content rate of the Si alloy in the negative electrode active material is 15%.

(Example 7) for reference

The negative electrode and battery are prepared by the same method as that of Example 1 excepting that the amount of Si alloy is changed to 18.4 parts by mass and the amount of graphite is changed to 73.6 parts by mass. The content rate of the Si alloy in the negative electrode active material is 20%.

(Example 8) for reference

The negative electrode and battery are prepared by the same method as that of Example 1 excepting that the amount of Si alloy is changed to 23.0 parts by mass and the amount of graphite is changed to 69.0 parts by mass. The content rate of the Si alloy in the negative electrode active material is 25%.

(Example 9) for reference

The negative electrode and battery are prepared by the same method as that of Example 1 excepting that the amount of Si alloy is changed to 27.6 parts by mass and the amount of graphite is changed to 64.4 parts by mass. The content rate of the Si alloy in the negative electrode active material is 30%.

(Example 10) for reference

The negative electrode and battery are prepared by the same method as that of Example 1 excepting that the amount of Si alloy is changed to 36.8 parts by mass and the amount of graphite is changed to 55.2 parts by mass. The content rate of the Si alloy in the negative electrode active material is 40%.

(Example 11) for reference

The negative electrode and battery are prepared by the same method as that of Example 1 excepting that the amount of Si alloy is changed to 46.0 parts by mass and the amount of graphite is changed to 46.0 parts by mass. The content rate of the Si alloy in the negative electrode active material is 50%.

(Example 12) for reference

The negative electrode and battery are prepared by the same method as that of Example 1 excepting that the amount of Si alloy is changed to 55.2 parts by mass and the amount of graphite is changed to 36.8 parts by mass. The content rate of the Si alloy in the negative electrode active material is 60%.

(Example 13) for reference

The negative electrode and battery are prepared by the same method as that of Example 1 excepting that the amount of Si alloy is changed to 64.4 parts by mass and the amount of graphite is changed to 27.6 parts by mass. The content rate of the Si alloy in the negative electrode active material is 70%.

<Performance Evaluation>

[Evaluation of Cycle Characteristic]

The lithium ion secondary batteries prepared above are subjected to cycle characteristic evaluation in the following manner. Each battery is charged to 2.0 V in the atmosphere of 30°C in constant-current mode (CC, current: 0.1 C) and is rested for 10 minutes. Subsequently, the battery is discharged to 0.01 V in constant-current mode (CC, current: 0.1 C) and is then rested for 10 minutes. Herein, the above charge and discharge are considered as one cycle. Each lithium ion secondary battery is subjected to the charge-discharge test for 100 cycles, and the ratio of discharge capacity at the 100th cycle to the discharge capacity at the first cycle (discharge capacity retention rate (%) is calculated.

The obtained results are shown in Table 4 and Fig. 18 below.

[Evaluation of Energy Density]

The lithium ion secondary batteries prepared above are subjected to cycle characteristic evaluation in the following manner. As the initial charge and discharge process, each battery is charged with a current of 0.2 C to the theoretical capacity of the positive electrode in constant-current mode and then is charged at a constant voltage of 4.2 V for 10 hours in total. Subsequently, the battery is discharged to 2.7 V in constant-current mode with a discharge current of 0.2 C. The battery energy is calculated from the charge-discharge curve in this process and is divided by the battery weight, thus calculating the energy density of the battery. The obtained results are shown in Table 4 and Fig. 18 below.

[Table 4]

|  | Content rate of Si alloy (%) | Discharge capacity retention rate (%) | Energy density (mAh/g) |
| --- | --- | --- | --- |
| Example 1 | 3 | 98 | 397 |
| Example 2 | 5 | 98 | 420 |
| Example 3 | 7 | 97 | 443 |
| Example 4 | 10 | 97 | 477 |
| Example 5 | 12 | 96 | 499 |
| Example 6 | 15 | 95 | 534 |
| Example 7 | 20 | 93 | 590 |
| Example 8 | 25 | 91 | 647 |
| Example 9 | 30 | 89 | 704 |
| Example 10 | 40 | 85 | 818 |
| Example 11 | 50 | 80 | 932 |
| Example 12 | 60 | 70 | 1045 |
| Example 13 | 70 | 45 | 1159 |

In Table 4, Examples 1 to 13 are reference Examples not falling under the scope of the present invention.

From the results in Table 4 above and Fig. 18, it is understood that the batteries employing the negative electrode active materials composed of the mixtures of graphite and the Si alloys of Examples 1 to 13 exhibit good balanced characteristics of having high initial capacity and retaining high cycle characteristics.

This application is based upon Japanese Patent Application No. 2012-256931 filed on November 22, 2012.

REFERENCE SIGNS LIST

10, 50 LITHIUM ION SECONDARY BATTERY (LAMINATED BATTERY)
11 POSITIVE ELECTRODE CURRENT COLLECTOR
12 NEGATIVE ELECTRODE CURRENT COLLECTOR
13 POSITIVE ELECTRODE ACTIVE MATERIAL LAYER
15 NEGATIVE ELECTRODE ACTIVE MATERIAL LAYER
17 ELECTROLYTE LAYER
19 SINGLE CELL LAYER
21,57 POWER GENERATION ELEMENT
25,58 POSITIVE ELECTRODE CURRENT COLLECTING PLATE
27, 59 NEGATIVE ELECTRODE CURRENT COLLECTING PLATE
29, 52 BATTERY EXTERIOR MEMBER (LAMINATED FILM)

## Claims

1. A negative electrode for an electric device, comprising: a current collector (12); and an electrode layer (15) containing a negative electrode active material, an electrically-conductive auxiliary agent and a binder and formed on a surface of the current collector (12),
**characterized in that** the negative electrode active material is a mixture of a carbon material and an alloy represented by the following formula (1):

$$Si_xSn_yM_zA_a \ldots \qquad (1)$$

in formula (1), M is V,
A is inevitable impurity, and
x, y, z, and a represent mass percent values and satisfy $27 \leq x < 100$, $0 < y \leq 73$, $0 < z \leq 73$, and $0 \leq a < 0.5$, $x + y + z + a = 100$, and
wherein the alloy has an average particle diameter smaller than that of the carbon material, and the alloy is located between particles of the carbon material.

2. The negative electrode for an electric device according to claim 1, wherein the x is not more than 84, the y is not less than 10 and not more than 73, and the z is not less than 6 and not more than 73.

3. The negative electrode for an electric device according to claim 2, wherein the y is not less than 10 and not more than 63, and the z is not less than 6 and not more than 63.

4. The negative electrode for an electric device according to claim 3, wherein the x is not more than 52.

5. The negative electrode for an electric device according to claim 4, wherein the y is not more than 40, and the z is not less than 20.

6. The negative electrode for an electric device according to any one of claims 1 to 5, wherein a content rate of the alloy in the negative electrode active material is 3 to 70 mass%.

7. The negative electrode for an electric device according to claim 6, wherein the content rate of the alloy in the negative electrode active material is 30 to 50 mass%.

8. The negative electrode for an electric device according to claim 6, wherein the content rate of the alloy in the negative electrode active material is 50 to 70 mass%.

9. An electric device comprising a negative electrode for an electric device according to any one of claims 1 to 8.

## Patentansprüche

1. Negative Elektrode für eine elektrische Vorrichtung, die Folgendes umfasst: einen Stromkollektor (12); und eine Elektrodenschicht (15), die ein aktives Negativelektrodenmaterial, ein elektrisch leitfähiges Zusatzmittel und ein Bindemittel enthält und auf einer Oberfläche des Stromkollektors (12) ausgebildet ist,
**dadurch gekennzeichnet, dass** das aktive Negativelektrodenmaterial ein Gemisch aus einem Kohlenstoffmaterial und einer Legierung ist, die durch die folgende Formel (1) dargestellt wird:

$$Si_xSn_yM_zA_a \ldots \qquad (1)$$

wobei in Formel (1):

M gleich V ist,
A unvermeidliche Verunreinigungen sind, und
x, y, z und a Masseprozentwerte darstellen und Folgendes erfüllen: $27 \leq x < 100$, $0 < y \leq 73$, $0 < z \leq 73$, und $0 \leq a < 0,5$, $x + y + z + a = 100$, und
wobei die Legierung einen durchschnittlichen Teilchendurchmesser hat, der kleiner ist als der des Kohlenstoffmaterials, und die Legierung sich zwischen Teilchen des Kohlenstoffmaterials befindet.

**2.** Negative Elektrode für eine elektrische Vorrichtung nach Anspruch 1, wobei das x nicht mehr als 84 ist, das y nicht weniger als 10 und nicht mehr als 73 ist, und das z nicht weniger als 6 und nicht mehr als 73 ist.

**3.** Negative Elektrode für eine elektrische Vorrichtung nach Anspruch 2, wobei das y nicht weniger als 10 und nicht mehr als 63 ist und das z nicht weniger als 6 und nicht mehr als 63 ist.

**4.** Negative Elektrode für eine elektrische Vorrichtung nach Anspruch 3, wobei das x nicht mehr als 52 ist.

**5.** Negative Elektrode für eine elektrische Vorrichtung nach Anspruch 4, wobei das y nicht mehr als 40 ist und das z nicht weniger als 20 ist.

**6.** Negative Elektrode für eine elektrische Vorrichtung nach einem der Ansprüche 1 bis 5, wobei eine Gehaltsrate der Legierung in dem aktiven Negativelektrodenmaterial 3 bis 70 Masse-% beträgt.

**7.** Negative Elektrode für eine elektrische Vorrichtung nach Anspruch 6, wobei die Gehaltsrate der Legierung in dem aktiven Negativelektrodenmaterial 30 bis 50 Masse-% beträgt.

**8.** Negative Elektrode für eine elektrische Vorrichtung nach Anspruch 6, wobei die Gehaltsrate der Legierung in dem aktiven Negativelektrodenmaterial 50 bis 70 Masse-% beträgt.

**9.** Elektrische Vorrichtung, die eine negative Elektrode für eine elektrische Vorrichtung nach einem der Ansprüche 1 bis 8 umfasst.

**Revendications**

**1.** Électrode négative pour un dispositif électrique, comprenant: un collecteur de courant (12); et une couche d'électrode (15) contenant un matériau actif d'électrode négative, un agent auxiliaire électroconducteur et un liant et formée sur une surface du collecteur de courant (12),
**caractérisée en ce que** le matériau actif d'électrode négative est un mélange d'un matériau carboné et d'un alliage représenté par la formule (1) suivante :

$$Si_xSn_yM_zA_a \text{ ...} \qquad (1)$$

dans la formule (1), M représente V,
A représente une impureté inévitable, et
x, y, z et a représentent des valeurs de pourcentage massique et satisfont les relations $27 \leq x < 100, 0 < y \leq 73, 0 < z \leq 73$ et $0 \leq a < 0,5$, $x + y + z + a = 100$, et
où l'alliage a un diamètre moyen de particules inférieur à celui du matériau carboné, et l'alliage est situé entre des particules du matériau carboné.

**2.** Électrode négative pour un dispositif électrique selon la revendication 1, dans laquelle x est inférieur ou égal à 84, y est supérieur ou égal à 10 et inférieur ou égal à 73, et z est supérieur ou égal à 6 et inférieur ou égal à 73.

**3.** Électrode négative pour un dispositif électrique selon la revendication 2, dans laquelle y est supérieur ou égal à 10 et inférieur ou égal à 63, et z est supérieur ou égal à 6 et inférieur ou égal à 63.

**4.** Électrode négative pour un dispositif électrique selon la revendication 3, dans laquelle x est inférieur ou égal à 52.

**5.** Électrode négative pour un dispositif électrique selon la revendication 4, dans laquelle y est inférieur ou égal à 40, et z est supérieur ou égal à 20.

**6.** Électrode négative pour un dispositif électrique selon l'une quelconque des revendications 1 à 5, dans laquelle le taux de teneur en alliage dans le matériau actif d'électrode négative est de 3 à 70% en masse.

**7.** Électrode négative pour un dispositif électrique selon la revendication 6, dans laquelle le taux de teneur en alliage dans le matériau actif d'électrode négative est de 30 à 50% en masse.

**8.** Électrode négative pour un dispositif électrique selon la revendication 6, dans laquelle le taux de teneur en alliage dans le matériau actif d'électrode négative est de 50 à 70% en masse.

**9.** Dispositif électrique comprenant une électrode négative pour un dispositif électrique selon l'une quelconque des revendications 1 à 8.

FIG. 1

# FIG. 2

50

# FIG. 3

# FIG. 4

# FIG. 5

FIG. 6

# FIG. 7

# FIG. 8

FIG. 9

FIG. 10

# FIG. 11

# FIG. 12

# FIG. 13

# FIG. 14

FIG. 15

FIG. 16

## FIG. 17

## FIG. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009517850 A
- WO 2004086539 A1
- JP 2012185913 A
- JP 2012256931 A